(19) Europäisches Patentamt
European Patent Office
Office européen des brevets

(11) **EP 4 561 072 A1**

(12) **EUROPEAN PATENT APPLICATION**
published in accordance with Art. 153(4) EPC

(43) Date of publication:
**28.05.2025 Bulletin 2025/22**

(21) Application number: 23843349.4

(22) Date of filing: **19.07.2023**

(51) International Patent Classification (IPC):
*H04N 19/593* (2014.01)   *H04N 19/105* (2014.01)
*H04N 19/176* (2014.01)   *H04N 19/11* (2014.01)
*H04N 19/70* (2014.01)

(52) Cooperative Patent Classification (CPC):
**H04N 19/105; H04N 19/11; H04N 19/176;
H04N 19/593; H04N 19/70**

(86) International application number:
**PCT/KR2023/010358**

(87) International publication number:
**WO 2024/019503 (25.01.2024 Gazette 2024/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.07.2022   US 202263390623 P**

(71) Applicant: **LG Electronics Inc.
Yeongdeungpo-gu
Seoul 07336 (KR)**

(72) Inventors:
• **JANG, Hyeong Moon
Seoul 06772 (KR)**
• **LIM, Jaehyun
Seoul 06772 (KR)**
• **PARK, Nae Ri
Seoul 06772 (KR)**
• **NAM, Jung Hak
Seoul 06772 (KR)**

(74) Representative: **Frenkel, Matthias Alexander
Wuesthoff & Wuesthoff
Patentanwälte und Rechtsanwalt PartG mbB
Schweigerstraße 2
81541 München (DE)**

(54) **IMAGE ENCODING/DECODING METHOD FOR TEMPLATE MATCHING HANDLING, METHOD FOR TRANSMITTING BITSTREAM, AND RECORDING MEDIUM HAVING BITSTREAM STORED THEREIN**

(57)     An image encoding/decoding method for template matching handling, a method of transmitting a bitstream and a recording medium storing a bitstream are provided. An image decoding method performed by an image decoding apparatus may comprise determining a prediction mode of a current block, generating a prediction block of the current block based on the prediction mode, and reconstructing the current block based on the prediction block. The prediction mode may be determined based on template matching-based coding tool enabling information.

FIG. 11

START
S1110 DETERMINE PREDICTION MODE OF CURRENT BLOCK
S1120 GENERATE PREDICTION BLOCK OF CURRENT BLOCK BASED ON PREDICTION MODE
S1130 RECONSTRUCT CURRENT BLOCK BASED ON PREDICTION BLOCK
END

**EP 4 561 072 A1**

## Description

## Technical Field

The present disclosure relates to an image encoding/decoding method and apparatus for template matching handling, a method of transmitting a bitstream and a recording medium storing a bitstream, and, more particularly, to a method of performing template matching-based prediction.

## Background Art

Recently, demand for high-resolution and high-quality images such as high definition (HD) images and ultra high definition (UHD) images is increasing in various fields. As resolution and quality of image data are improved, the amount of transmitted information or bits relatively increases as compared to existing image data. An increase in the amount of transmitted information or bits causes an increase in transmission cost and storage cost.

Accordingly, there is a need for high-efficient image compression technique for effectively transmitting, storing and reproducing information on high-resolution and high-quality images.

## Disclosure

## Technical Problem

An object of the present disclosure is to provide an image encoding/decoding method and apparatus with improved encoding/decoding efficiency.

Also, an object of the present disclosure is to provide a method of performing prediction using a template matching-based prediction mode including a template matching merge mode, etc.

Also, an object of the present disclosure is to provide a method of signaling information that may enable a template matching-based coding tool.

Also, an object of the present disclosure is to provide a relationship between template matching-based coding tool enabling information.

Also, an object of the present disclosure is to provide a non-transitory recording medium storing a bitstream received, decoded and used to reconstruct an image by an image decoding apparatus according to the present disclosure.

Also, an object of the present disclosure is to provide a non-transitory computer-readable medium recording a bitstream received and decoded by an apparatus for decoding an image.

Also, an object of the present disclosure is to provide a method of transmitting a bitstream generated by an image encoding method according to the present disclosure.

The technical problems solved by the present disclosure are not limited to the above technical problems and other technical problems which are not described herein will become apparent to those skilled in the art from the following description.

## Technical Solution

An image decoding according to an aspect of the present disclosure may comprise determining a prediction mode of a current block, generating a prediction block of the current block based on the prediction mode, and reconstructing the current block based on the prediction block. The prediction mode may be determined based on template matching-based coding tool enabling information.

According to an embodiment of the present disclosure, the template matching-based coding tool enabling information may include template matching-based screen content coding tool enabling information.

According to an embodiment of the present disclosure, the template matching-based coding tool enabling information may include intra block copy enabling information or intra template matching enabling information.

According to an embodiment of the present disclosure, the template matching-based coding tool enabling information may include template matching-based inter coding tool enabling information.

According to an embodiment of the present disclosure, the template matching-based coding tool enabling information may include at least one of OBMC enabling information, ARMC enabling information, AMVP enabling information, merge enabling information, GPM enabling information, TMVP non-adjacent reordering enabling information, MVD sign prediction enabling information, MMVD affine enabling information, GPM split mode reordering enabling information, or reference picture reordering enabling information.

According to an embodiment of the present disclosure, the template matching-based coding tool enabling information may include template matching-based intra coding tool enabling information.

According to an embodiment of the present disclosure, the template matching-based coding tool enabling information may include at least one of intra block copy enabling information, intra template matching enabling information, intra mode derivation enabling information or CIIP enabling information.

According to an embodiment of the present disclosure, the template matching-based coding tool enabling information may be obtained from a bitstream.

According to an embodiment of the present disclosure, the template matching-based coding tool enabling information may be included in one of a video parameter set, a sequence parameter set, a picture parameter set, a slice header or a picture header.

An image encoding method according to an aspect of the present disclosure may comprise determining a prediction mode of a current block, generating a prediction block of the current block based on the prediction mode, and reconstructing the current block based on the prediction block. The prediction mode may be determined based on template matching-based coding tool enabling information.

According to an embodiment of the present disclosure, the template matching-based coding tool enabling information may be encoded in a bitstream.

A method of transmitting a bitstream according to an aspect of the present disclosure may comprise transmitting a bitstream generated by an image encoding method. The image encoding method may comprise determining a prediction mode of a current block, generating a prediction block of the current block based on the prediction mode, and reconstructing the current block based on the prediction block. The prediction mode may be determined based on template matching-based coding tool enabling information.

A computer-readable recording medium according to another aspect of the present disclosure can store a bitstream generated by an image encoding method or apparatus of the present disclosure.

A transmission method according to another aspect of the present disclosure can transmit a bitstream generated by an image encoding method or apparatus of the present disclosure.

The features briefly summarized above with respect to the present disclosure are merely exemplary aspects of the detailed description below of the present disclosure, and do not limit the scope of the present disclosure.

**Advantageous Effects**

According to the present disclosure, it is possible to provide an image encoding/decoding method and apparatus with improved encoding/decoding efficiency.

Also, according to the present disclosure, it is possible to provide a method of performing prediction using a template matching-based prediction mode including a template matching merge mode, etc.

Also, according to the present disclosure, it is possible to provide a method of independently handling template matching-based technologies.

Also, according to the present disclosure, it is possible to provide a method of signaling information that may enable a template matching-based coding tool.

Also, according to the present disclosure, it is possible to provide a relationship between template matching-based coding tool enabling information.

Also, according to the present disclosure, it is possible to provide a non-transitory recording medium storing a bitstream generated by an image encoding method.

Also, according to the present disclosure, it is possible to provide a non-transitory recording medium storing a bitstream received, decoded and used to reconstruct an image by an image decoding apparatus according to the present disclosure.

Also, according to the present disclosure, it is possible to provide a method for transmitting a bitstream generated by an image encoding method.

It will be appreciated by persons skilled in the art that that the effects that can be achieved through the present disclosure are not limited to what has been particularly described hereinabove and other advantages of the present disclosure will be more clearly understood from the detailed description.

**Description of Drawings**

FIG. 1 is a view schematically showing a video coding system, to which an embodiment of the present disclosure is applicable.

FIG. 2 is a view schematically showing an image encoding apparatus, to which an embodiment of the present disclosure is applicable.

FIG. 3 is a view schematically showing an image decoding apparatus, to which an embodiment of the present disclosure is applicable.

FIG. 4 is a diagram schematically showing an inter prediction unit of an image encoding apparatus.

FIG. 5 is a flowchart illustrating a method of encoding an image based on inter prediction.

FIG. 6 is a diagram schematically showing an inter prediction unit of an image decoding apparatus.

FIG. 7 is a flowchart illustrating a method of decoding an image based on inter prediction.

FIG. 8 is a flowchart showing an inter prediction method.

FIG. 9 is a diagram for explaining a template matching-based encoding/decoding method according to the present disclosure.

FIG. 10 is an exemplary diagram illustrating a multi-pass decoder-side motion vector refinement (DMVR) according to the present disclosure.

FIG. 11 is a flowchart illustrating an image encoding/decoding method according to an embodiment of the present disclosure.

FIG. 12 is a view showing a content streaming system to which an embodiment of the present disclosure is applicable.

**Mode for Invention**

Hereinafter, the embodiments of the present disclosure will be described in detail with reference to the accompanying drawings so as to be easily implemented by those skilled in the art. However, the present disclosure may be implemented in various different forms, and is not limited to the embodiments described herein.

In describing the present disclosure, if it is determined that the detailed description of a related known function or construction renders the scope of the present disclosure unnecessarily ambiguous, the detailed description thereof will be omitted. In the drawings, parts not related to the description of the present disclosure are omitted, and similar reference numerals are attached to similar parts.

In the present disclosure, when a component is "connected", "coupled" or "linked" to another component, it may include not only a direct connection relationship but also an indirect connection relationship in which an intervening component is present. In addition, when a component "includes" or "has" other components, it means that other components may be further included, rather than excluding other components unless otherwise stated.

In the present disclosure, the terms first, second, etc. may be used only for the purpose of distinguishing one component from other components, and do not limit the order or importance of the components unless otherwise stated. Accordingly, within the scope of the present disclosure, a first component in one embodiment may be referred to as a second component in another embodiment, and similarly, a second component in one embodiment may be referred to as a first component in another embodiment.

In the present disclosure, components that are distinguished from each other are intended to clearly describe each feature, and do not mean that the components are necessarily separated. That is, a plurality of components may be integrated and implemented in one hardware or software unit, or one component may be distributed and implemented in a plurality of hardware or software units. Therefore, even if not stated otherwise, such embodiments in which the components are integrated or the component is distributed are also included in the scope of the present disclosure.

In the present disclosure, the components described in various embodiments do not necessarily mean essential components, and some components may be optional components. Accordingly, an embodiment consisting of a subset of components described in an embodiment is also included in the scope of the present disclosure. In addition, embodiments including other components in addition to components described in the various embodiments are included in the scope of the present disclosure.

The present disclosure relates to encoding and decoding of an image, and terms used in the present disclosure may have a general meaning commonly used in the technical field, to which the present disclosure belongs, unless newly defined in the present disclosure.

In the present disclosure, "picture" generally means the basis representing one image in a particular time period, and a slice/tile is an encoding basis constituting a part of a picture. One picture may be composed of one or more slices/tiles. In addition, a slice/tile may include one or more coding tree units (CTUs).

In the present disclosure, a "pixel" or a "pel" may mean a smallest unit constituting one picture (or image). In addition, "sample" may be used as a term corresponding to a pixel. A sample may generally represent a pixel or a value of a pixel, and may represent only a pixel/pixel value of a luma component or only a pixel/pixel value of a chroma component.

In the present disclosure, a "unit" may represent a basic unit of image processing. The unit may include at least one of a specific region of the picture and information related to the region. One unit may include one luma block and two chroma (e.g., Cb, Cr) blocks. The unit may be used interchangeably with terms such as "sample array", "block" or "area" in some cases. In a general case, an M×N block may include samples (or sample arrays) or a set (or array) of transform coefficients of M columns and N rows.

In the present disclosure, "current block" may mean one of "current coding block", "current coding unit", "coding target block", "decoding target block" or "processing target block". When prediction is performed, "current block" may mean "current prediction block" or "prediction target block". When transform (inverse transform)/quantization (dequantization) is performed, "current block" may mean "current transform block" or "transform target block". When filtering is performed, "current block" may mean "filtering target block".

In addition, in the present disclosure, a "current block" may mean a block including both a luma component block and a chroma component block or "a luma block of a current block" unless explicitly stated as a chroma block. The luma component block of the current block may be expressed by including an explicit description of a luma component block such as "luma block" or "current luma block. In addition, the "chroma component block of the current block" may be expressed by including an explicit description of a chroma component block, such as "chroma block" or "current chroma block".

In the present disclosure, the term "/" and "," should be interpreted to indicate "and/or". For instance, the expression "A/B" and "A, B" may mean "A and/or B." Further, "A/B/C" and "A, B, C" may mean "at least one of A, B, and/or C."

In the present disclosure, the term "or" should be interpreted to indicate "and/or." For instance, the expression "A or B" may comprise 1) only "A", 2) only "B", and/or 3) both "A and B". In other words, in the present disclosure, the term "or" should be interpreted to indicate "additionally or alternatively."

### Overview of video coding system

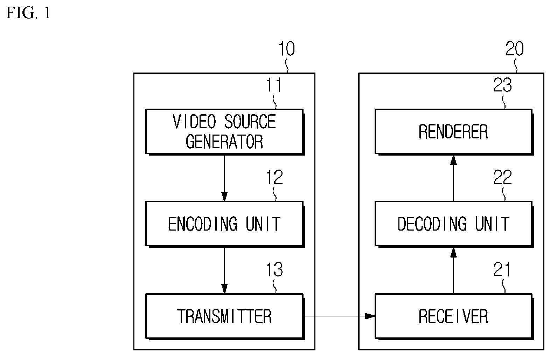

FIG. 1 is a view schematically showing a video coding system, to which an embodiment of the present disclosure is applicable.

The video coding system according to an embodiment may include an encoding apparatus 10 and a decoding apparatus 20. The encoding apparatus 10 may deliver encoded video and/or image information or data to the decoding apparatus 20 in the form of a file or streaming via a digital storage medium or network.

The encoding apparatus 10 according to an embodiment may include a video source generator 11, an encoding unit(encoder) 12 and a transmitter 13. The decoding apparatus 20 according to an embodiment may include a receiver 21, a decoding unit(decoder) 22 and a renderer 23. The encoding unit 12 may be called a video/image encoding apparatus, and the decoding unit 22 may be called a video/image decoding apparatus. The transmitter 13 may be included in the encoding unit 12. The receiver 21 may be included in the decoding unit 22. The renderer 23 may include a display and the display may be configured as a separate device or an external component.

The video source generator 11 may acquire a video/image through a process of capturing, synthesizing or generating the video/image. The video source generator 11 may include a video/image capture device and/or a video/image generating device. The video/image capture device may include, for example, one or more cameras, video/image archives including previously captured video/images, and the like. The video/image generating device may include, for example, computers, tablets and smartphones, and may (electronically) generate video/images. For example, a virtual video/image may be generated through a computer or the like. In this case, the video/image capturing process may be replaced by a process of generating related data.

The encoding unit 12 may encode an input video/image. The encoding unit 12 may perform a series of procedures such as prediction, transform, and quantization for compression and coding efficiency. The encoding unit 12 may output encoded data (encoded video/image information) in the form of a bitstream.

The transmitter 13 may obtain the encoded video/image information or data output in the form of a bitstream and forward it to the receiver 21 of the decoding apparatus 20 or another external object through a digital storage medium or a network in the form of a file or streaming. The digital storage medium may include various storage mediums such as USB, SD, CD, DVD, Blu-ray, HDD, SSD, and the like. The transmitter 13 may include an element for generating a media file through a predetermined file format and may include an element for transmission through a broadcast/communication network. The transmitter 13 may be provided as a transmission device separate from the encoding apparatus 12, and in this case, the transmission device may include at least one processor that acquires encoded video/image information or data output in the form of a bitstream and a transmission unit for transmitting it in the form of a file or streaming. The receiver 21 may extract/receive the bitstream from the storage medium or network and transmit the bitstream to the decoding unit 22.

The decoding unit 22 may decode the video/image by performing a series of procedures such as dequantization, inverse transform, and prediction corresponding to the operation of the encoding unit 12.

The renderer 23 may render the decoded video/image. The rendered video/image may be displayed through the display.

### Overview of image encoding apparatus

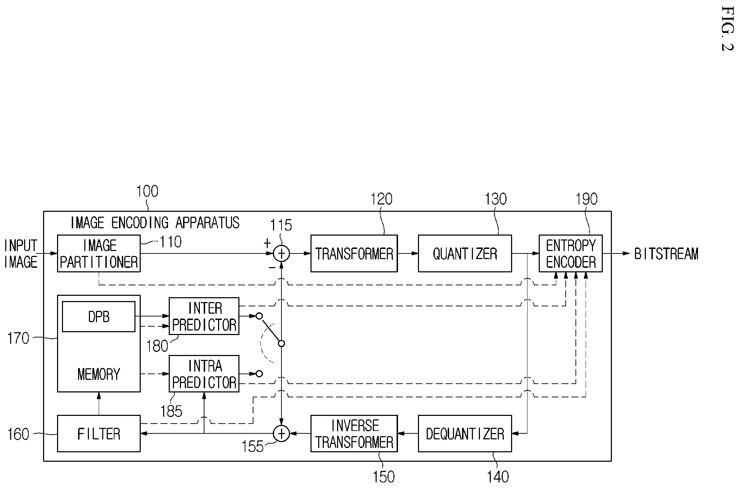

FIG. 2 is a view schematically showing an image encoding apparatus, to which an embodiment of the present disclosure is applicable.

As shown in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter prediction unit 180, an intra prediction unit 185 and an entropy encoder 190. The inter prediction unit 180 and the intra prediction unit 185 may be collectively referred to as a "prediction unit". The transformer 120, the quantizer 130, the dequantizer 140 and the inverse transformer 150 may be included in a residual processor. The residual processor may further include the subtractor 115.

All or at least some of the plurality of components configuring the image encoding apparatus 100 may be configured by one hardware component (e.g., an encoder or a processor) in some embodiments. In addition, the memory 170 may include a decoded picture buffer (DPB) and may be configured by a digital storage medium.

The image partitioner 110 may partition an input image (or a picture or a frame) input to the image encoding apparatus 100 into one or more processing units. For example, the processing unit may be called a coding unit (CU). The coding unit may be acquired by recursively partitioning a coding tree unit (CTU) or a largest coding unit (LCU) according to a quad-tree binary-tree ternary-tree (QT/BT/TT) structure. For example, one coding unit may be partitioned into a plurality of coding units of a deeper depth based on a quad tree structure, a binary tree structure, and/or a ternary structure. For partitioning of the coding unit, a quad tree structure may be applied first and the binary tree structure and/or ternary structure may be applied later. The coding procedure according to the present disclosure may be performed based on the final coding unit that is no longer partitioned. The largest coding unit may be used as the final coding unit or the coding unit of deeper depth acquired by partitioning the largest coding unit may be used as the final coding unit. Here, the coding procedure may include a procedure of prediction, transform, and reconstruction, which will be described later. As another example, the processing unit of the coding procedure may be a prediction unit (PU) or a transform unit (TU). The prediction unit and the transform unit may be split or partitioned from the final coding unit. The prediction unit may be a unit of sample prediction, and the transform unit may be a unit for deriving a transform coefficient and/or a unit for deriving a residual signal from the transform coefficient.

The prediction unit (the inter prediction unit 180 or the intra prediction unit 185) may perform prediction on a block to be processed (current block) and generate a predicted block including prediction samples for the current block. The prediction unit may determine whether intra prediction or inter prediction is applied on a current block or CU basis. The prediction unit may generate various information related to prediction of the current block and transmit the generated information to the entropy encoder 190. The information on the prediction may be encoded in the entropy encoder 190 and output in the form of a bitstream.

The intra prediction unit(intra predictor) 185 may predict the current block by referring to the samples in the current picture. The referred samples may be located in the neighborhood of the current block or may be located apart according to the intra prediction mode and/or the intra prediction technique. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes according to the degree of detail of the prediction direction. However, this is merely an example, more or less directional prediction modes may be used depending on a setting. The intra prediction unit 185 may determine the prediction mode applied to the current block by using a prediction mode applied to a neighboring block.

The inter prediction unit(inter predictor) 180 may derive a predicted block for the current block based on a reference block (reference sample array) specified by a motion vector on a reference picture. In this case, in order to reduce the amount of motion information transmitted in the inter prediction mode, the motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. The reference picture including the reference block and the reference picture including the temporal neighboring block may be the same or different. The temporal neighboring block may be called a collocated reference block, a co-located CU (colCU), and the like. The reference picture including the temporal neighboring block may be called a collocated picture (colPic). For example, the inter prediction unit 180 may configure a motion information candidate list based on neighboring blocks and generate information indicating which candidate is used to derive a motion vector and/or a reference picture index of the current block. Inter prediction may be performed based on various prediction modes. For example, in the case of a skip mode and a merge mode, the inter prediction unit 180 may use motion information of the neighboring block as motion information of the current block. In the case of the skip mode, unlike the merge mode, the residual signal may not be transmitted. In the case of the motion vector prediction (MVP) mode, the motion vector of the neighboring block may be used as a motion vector predictor, and the motion vector of the current block may be signaled by encoding a motion vector difference and an indicator for a motion vector predictor. The motion vector difference may mean a difference between the motion vector of the current block and the motion vector predictor.

The prediction unit may generate a prediction signal based on various prediction methods and prediction techniques described below. For example, the prediction unit may not only apply intra prediction or inter prediction but also simultaneously apply both intra prediction and inter prediction, in order to predict the current block. A prediction method of simultaneously applying both intra prediction and inter prediction for prediction of the current block may be called combined inter and intra prediction (CIIP). In addition, the prediction unit may perform intra block copy (IBC) for prediction of the current block. Intra block copy may be used for content image/video coding of a game or the like, for example, screen content coding (SCC). IBC is a method of predicting a current picture using a previously reconstructed reference block in the current picture at a location apart from the current block by a predetermined distance. When IBC is applied, the location of the reference block in the current picture may be encoded as a vector (block vector) corresponding to the predetermined distance. IBC basically performs prediction in the current picture, but may be performed similarly to inter prediction in that a reference block is derived within the current picture. That is, IBC may use at least one of the inter prediction techniques described in the present disclosure.

The prediction signal generated by the prediction unit may be used to generate a reconstructed signal or to generate a residual signal. The subtractor 115 may generate a residual signal (residual block or residual sample array) by subtracting the prediction signal (predicted block or prediction sample array) output from the prediction unit from the input image signal (original block or original sample array). The generated residual signal may be transmitted to the transformer 120.

The transformer 120 may generate transform coefficients by applying a transform technique to the residual signal. For example, the transform technique may include at least one of a discrete cosine transform (DCT), a discrete sine transform (DST), a karhunen-loève transform (KLT), a graph-based transform (GBT), or a conditionally non-linear transform (CNT). Here, the GBT means transform obtained from a graph when relationship information between pixels is represented by the graph. The CNT refers to transform acquired based on a prediction signal generated using all previously reconstructed pixels. In addition, the transform process may be applied to square pixel blocks having the same size or may be applied to blocks having a variable size rather than square.

The quantizer 130 may quantize the transform coefficients and transmit them to the entropy encoder 190. The entropy encoder 190 may encode the quantized signal (information on the quantized transform coefficients) and output a bitstream. The information on the quantized transform coefficients may be referred to as residual information. The quantizer 130 may rearrange quantized transform coefficients in a block type into a one-dimensional vector form based on a coefficient scanning order and generate information on the quantized transform coefficients based on the quantized transform coefficients in the one-dimensional vector form.

The entropy encoder 190 may perform various encoding methods such as, for example, exponential Golomb, context-adaptive variable length coding (CAVLC), context-adaptive binary arithmetic coding (CABAC), and the like. The entropy encoder 190 may encode information necessary for video/image reconstruction other than quantized transform coefficients (e.g., values of syntax elements, etc.) together or separately. Encoded information (e.g., encoded video/image information) may be transmitted or stored in units of network abstraction layers (NALs) in the form of a bitstream. The video/image information may further include information on various parameter sets such as an adaptation parameter set (APS), a picture parameter set (PPS), a sequence parameter set (SPS), or a video parameter set (VPS). In addition, the video/image information may further include general constraint information. The signaled information, transmitted information and/or syntax elements described in the present disclosure may be encoded through the above-described encoding procedure and included in the bitstream.

The bitstream may be transmitted over a network or may be stored in a digital storage medium. The network may include a broadcasting network and/or a communication network, and the digital storage medium may include various storage media such as USB, SD, CD, DVD, Blu-ray, HDD, SSD, and the like. A transmitter (not shown) transmitting a signal output from the entropy encoder 190 and/or a storage unit (not shown) storing the signal may be included as internal/external element of the image encoding apparatus 100. Alternatively, the transmitter may be provided as the component of the entropy encoder 190.

The quantized transform coefficients output from the quantizer 130 may be used to generate a residual signal. For example, the residual signal (residual block or residual samples) may be reconstructed by applying dequantization and inverse transform to the quantized transform coefficients through the dequantizer 140 and the inverse transformer 150.

The adder 155 adds the reconstructed residual signal to the prediction signal output from the inter prediction unit 180 or the intra prediction unit 185 to generate a reconstructed signal (reconstructed picture, reconstructed block, reconstructed sample array). If there is no residual for the block to be processed, such as a case where the skip mode is applied, the predicted block may be used as the reconstructed block. The adder 155 may be called a reconstructor or a reconstructed block generator. The generated reconstructed signal may be used for intra prediction of a next block to be processed in the current picture and may be used for inter prediction of a next picture through filtering as described below.

The filter 160 may improve subjective/objective image quality by applying filtering to the reconstructed signal. For example, the filter 160 may generate a modified reconstructed picture by applying various filtering methods to the reconstructed picture and store the modified reconstructed picture in the memory 170, specifically, a DPB of the memory 170. The various filtering methods may include, for example, deblocking filtering, a sample adaptive offset, an adaptive loop filter, a bilateral filter, and the like. The filter 160 may generate various information related to filtering and transmit the generated information to the entropy encoder 190 as described later in the description of each filtering method. The information related to filtering may be encoded by the entropy encoder 190 and output in the form of a bitstream.

The modified reconstructed picture transmitted to the memory 170 may be used as the reference picture in the inter prediction unit 180. When inter prediction is applied through the image encoding apparatus 100, prediction mismatch between the image encoding apparatus 100 and the image decoding apparatus may be avoided and encoding efficiency may be improved.

The DPB of the memory 170 may store the modified reconstructed picture for use as a reference picture in the inter prediction unit 180. The memory 170 may store the motion information of the block from which the motion information in the current picture is derived (or encoded) and/or the motion information of the blocks in the picture that have already been reconstructed. The stored motion information may be transmitted to the inter prediction unit 180 and used as the motion information of the spatial neighboring block or the motion information of the temporal neighboring block. The memory 170 may store reconstructed samples of reconstructed blocks in the current picture and may transfer the reconstructed samples to the intra prediction unit 185.

## Overview of image decoding apparatus

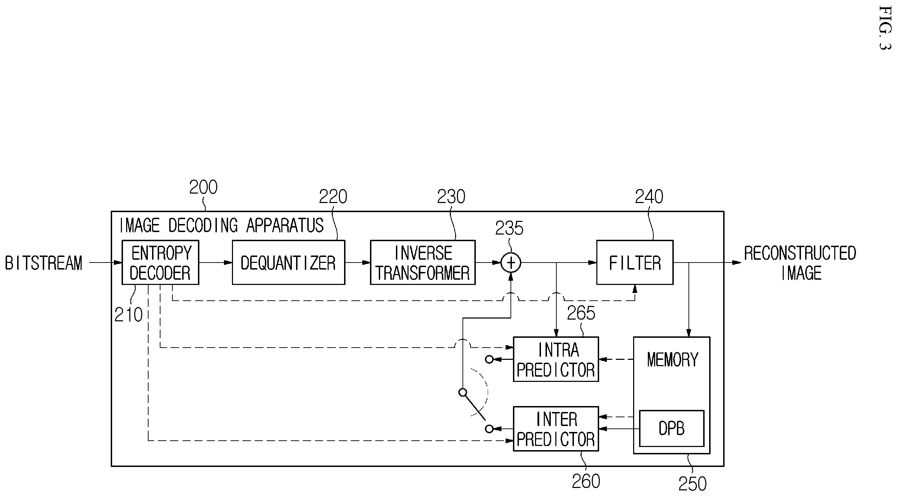

FIG. 3 is a view schematically showing an image decoding apparatus, to which an embodiment of the present disclosure is applicable.

As shown in FIG. 3, the image decoding apparatus 200 may include an entropy decoder 210, a dequantizer 220, an inverse transformer 230, an adder 235, a filter 240, a memory 250, an inter predictor 260 and an intra predictor 265. The inter predictor (inter prediction unit) 260 and the intra predictor(intra prediction unit) 265 may be collectively referred to as a "prediction unit(predictor)". The dequantizer 220 and the inverse transformer 230 may be included in a residual processor.

All or at least some of a plurality of components configuring the image decoding apparatus 200 may be configured by a hardware component (e.g., a decoder or a processor) according to an embodiment. In addition, the memory 170 may include a decoded picture buffer (DPB) or may be configured by a digital storage medium.

The image decoding apparatus 200, which has received a bitstream including video/image information, may reconstruct an image by performing a process corresponding to a process performed by the image encoding apparatus 100 of FIG. 2. For example, the image decoding apparatus 200 may perform decoding using a processing unit applied in the image encoding apparatus. Thus, the processing unit of decoding may be a coding unit, for example. The coding unit may be acquired by partitioning a coding tree unit or a largest coding unit. The reconstructed image signal decoded and output through the image decoding apparatus 200 may be reproduced through a reproducing apparatus (not shown).

The image decoding apparatus 200 may receive a signal output from the image encoding apparatus of FIG. 2 in the form of a bitstream. The received signal may be decoded through the entropy decoder 210. For example, the entropy decoder 210 may parse the bitstream to derive information (e.g., video/image information) necessary for image reconstruction (or picture reconstruction). The video/image information may further include information on various parameter sets such as an adaptation parameter set (APS), a picture parameter set (PPS), a sequence parameter set (SPS), or a video parameter set (VPS). In addition, the video/image information may further include general constraint information. The image decoding apparatus may further decode picture based on the information on the parameter set and/or the general constraint information. Signaled/received information and/or syntax elements described in the present disclosure may be decoded through the decoding procedure and obtained from the bitstream. For example, the entropy decoder 210 decodes the information in the bitstream based on a coding method such as exponential Golomb coding, CAVLC, or CABAC, and output values of syntax elements required for image reconstruction and quantized values of transform coefficients for residual. More specifically, the CABAC entropy decoding method may receive a bin corresponding to each syntax element in the bitstream, determine a context model using a decoding target syntax element information, decoding information of a neighboring block and a decoding target block or information of a symbol/bin decoded in a previous stage, and perform arithmetic decoding on the bin by predicting a probability of occurrence of a bin according to the determined context model, and generate a symbol corresponding to the value of each syntax element. In this case, the CABAC entropy decoding method may update the context model by using the information of the decoded symbol/bin for a context model of a next symbol/bin after determining the context model. The information related to the prediction among the information decoded by the entropy decoder 210 may be provided to the prediction unit (the inter predictor 260 and the intra predictor 265), and the residual value on which the entropy decoding was performed in the entropy decoder 210, that is, the quantized transform coefficients and related parameter information, may be input to the dequantizer 220. In addition, information on filtering among information decoded by the entropy decoder 210 may be provided to the filter 240. Meanwhile, a receiver (not shown) for receiving a signal output from the image encoding apparatus may be further configured as an internal/external element of the image decoding apparatus 200, or the receiver may be a component of the entropy decoder 210.

Meanwhile, the image decoding apparatus according to the present disclosure may be referred to as a video/image/picture decoding apparatus. The image decoding apparatus may be classified into an information decoder (video/image/picture information decoder) and a sample decoder (video/image/picture sample decoder). The information decoder may include the entropy decoder 210. The sample decoder may include at least one of the dequantizer 220, the inverse transformer 230, the adder 235, the filter 240, the memory 250, the inter predictor 260 or the intra prediction unit 265.

The dequantizer 220 may dequantize the quantized transform coefficients and output the transform coefficients. The dequantizer 220 may rearrange the quantized transform coefficients in the form of a two-dimensional block. In this case, the rearrangement may be performed based on the coefficient scanning order performed in the image encoding apparatus. The dequantizer 220 may perform dequantization on the quantized transform coefficients by using a quantization parameter (e.g., quantization step size information) and obtain transform coefficients.

The inverse transformer 230 may inversely transform the transform coefficients to obtain a residual signal (residual block, residual sample array).

The prediction unit may perform prediction on the current block and generate a predicted block including prediction samples for the current block. The prediction unit may determine whether intra prediction or inter prediction is applied to the current block based on the information on the prediction output from the entropy decoder 210 and may determine a specific intra/inter prediction mode (prediction technique).

It is the same as described in the prediction unit of the image encoding apparatus 100 that the prediction unit may generate the prediction signal based on various prediction methods (techniques) which will be described later.

The intra predictor 265 may predict the current block by referring to the samples in the current picture. The description of the intra prediction unit 185 is equally applied to the intra predictor 265.

The inter predictor 260 may derive a predicted block for the current block based on a reference block (reference sample array) specified by a motion vector on a reference picture. In this case, in order to reduce the amount of motion information transmitted in the inter prediction mode, motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. For example, the inter predictor 260 may configure a motion information candidate list based on neighboring blocks and derive a motion vector of the current block and/or a reference picture index based on the received candidate selection information. Inter prediction may be performed based on various prediction modes, and the information on the prediction may include information indicating a mode of inter prediction for the current block.

The adder 235 may generate a reconstructed signal (reconstructed picture, reconstructed block, reconstructed sample array) by adding the obtained residual signal to the prediction signal (predicted block, predicted sample array) output from the prediction unit (including the inter predictor 260 and/or the intra predictor 265). If there is no residual for the block to be processed, such as when the skip mode is applied, the predicted block may be used as the reconstructed block. The description of the adder 155 is equally applicable to the adder 235. The adder 235 may be called a reconstructor or a reconstructed block generator. The generated reconstructed signal may be used for intra prediction of a next block to be processed in the current picture and may be used for inter prediction of a next picture through filtering as described below.

The filter 240 may improve subjective/objective image quality by applying filtering to the reconstructed signal. For example, the filter 240 may generate a modified reconstructed picture by applying various filtering methods to the reconstructed picture and store the modified reconstructed picture in the memory 250, specifically, a DPB of the memory 250. The various filtering methods may include, for example, deblocking filtering, a sample adaptive offset, an adaptive loop filter, a bilateral filter, and the like.

The (modified) reconstructed picture stored in the DPB of the memory 250 may be used as a reference picture in the inter predictor 260. The memory 250 may store the motion information of the block from which the motion information in the current picture is derived (or decoded) and/or the motion information of the blocks in the picture that have already been reconstructed. The stored motion information may be transmitted to the inter predictor 260 so as to be utilized as the motion information of the spatial neighboring block or the motion information of the temporal neighboring block. The memory 250 may store reconstructed samples of reconstructed blocks in the current picture and transfer the reconstructed samples to the intra predictor 265.

In the present disclosure, the embodiments described in the filter 160, the inter prediction unit 180, and the intra prediction unit 185 of the image encoding apparatus 100 may be equally or correspondingly applied to the filter 240, the inter predictor 260, and the intra predictor 265 of the image decoding apparatus 200.

## Inter prediction

The prediction unit of the image encoding apparatus 100 and the image decoding apparatus 200 may derive a prediction sample by performing inter prediction on a per-block basis. Inter prediction can be a prediction derived in a manner that is dependent on data elements (e.g., sample values or motion information) of picture(s) other than the current picture. When inter prediction is applied to a current block, a predicted block (a prediction sample array) for the current block may be derived on the basis of a reference block (a reference sample array) specified by a motion vector on a reference picture indicated by a reference picture index. Herein, in order to reduce the amount of motion information transmitted in the inter prediction mode, the motion information of the current block may be predicted on a per block, subblock, or sample basis on the basis of the correlation of motion information between a neighboring block and the current block. The motion information may include a motion vector and a reference picture index. The motion information may further include inter prediction type (L0 prediction, L1 prediction, Bi prediction, etc.) information. When inter prediction is applied, neighboring blocks may include a spatial neighboring block present in the current picture and a temporal neighboring block present in the reference picture. The reference picture including the reference block and the reference picture including the temporal neighboring block may be the same or different. The temporal neighboring block may be called a collocated reference block or a collocated CU (colCU). The reference picture including the temporal neighboring block may be called a collocated picture (colPic). For example, a motion information candidate list may be constructed on the basis of neighboring blocks of the current block. A flag or index information indicating which candidate is selected (used) to derive a motion vector and/or a reference picture index of the current block may be signaled. Inter prediction may be performed on the basis of various prediction modes. For example, in the case of a skip mode and a merge mode, motion information of a current block may be the same as motion information of a selected neighboring block. In the case of the skip mode, unlike the merge mode, the residual signal may not be transmitted. In the case of a motion information prediction (motion vector prediction, MVP) mode, a motion vector of a selected neighboring block may be used as a motion vector predictor, and a motion vector difference may be signaled. In this case, a motion vector of the current block may be derived using the sum of the motion vector predictor and the motion vector difference.

The motion information may include L0 motion information and/or L1 motion information according to an inter prediction type (L0 prediction, L1 prediction, Bi prediction, etc.). A motion vector in the L0 direction may be called an L0 motion vector or MVL0, and a motion vector in the L1 direction may be called an L1 motion vector or MVL1. The prediction based on the L0 motion vector may be called L0 prediction. The prediction based on the L1 motion vector may be called L1 prediction. The prediction based on both the L0 motion vector and the L1 motion vector may be called bi-prediction. Herein, the L0 motion vector may refer to a motion vector associated with a reference picture list L0 (L0), and the L1 motion vector may refer to a motion vector associated with a reference picture list L1 (L1). The reference picture list L0 may include, as reference pictures, pictures preceding the current picture in terms of output order. The reference picture list L1 may include pictures following the current picture in terms of output order. The preceding pictures may be called forward (reference) pictures, and the following pictures may be called backward (reference) pictures. The reference picture list L0 may further include, as reference pictures, pictures following the current picture in terms of output order. In this case, within the reference picture list L0, the preceding pictures may be indexed first, and the following pictures may be indexed next. The reference picture list L1 may further include, as reference pictures, pictures preceding the current picture in terms of output order. In this case, within the reference picture list1, the following pictures may be indexed first, and the preceding pictures may be indexed next. Herein, the output order may correspond to the picture order count (POC) order.

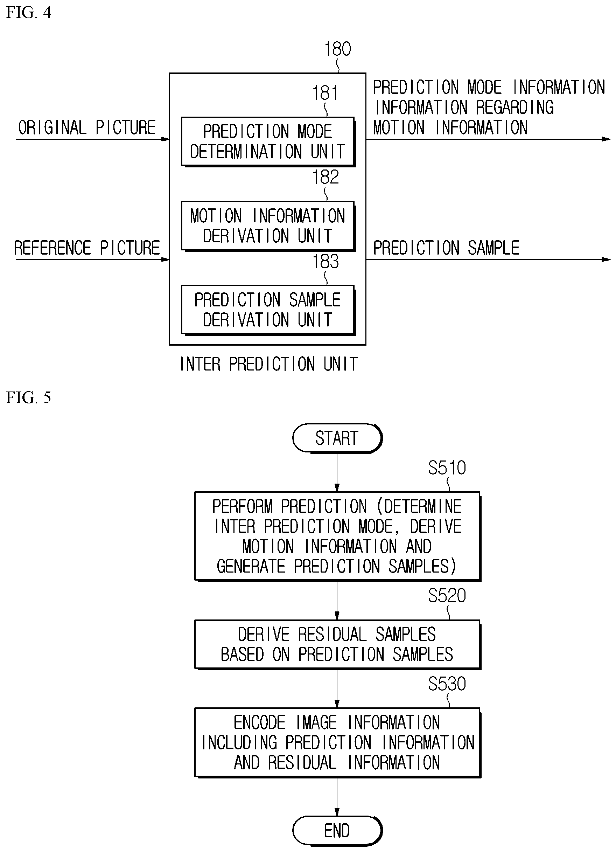

FIG. 4 is a diagram schematically showing the inter prediction unit 180 of the image encoding apparatus 100, and FIG. 5 is a flowchart illustrating a method of encoding an image based on inter prediction.

The image encoding apparatus 100 may perform inter prediction on a current block (S510). The image encoding apparatus 100 may derive an inter prediction mode and motion information of the current block, and may generate prediction samples of the current block. Herein, the procedures of determination of the inter prediction mode, derivation of the motion information, and generation of the prediction samples may be performed simultaneously, or any one procedure may be performed before the other procedures. For example, the inter prediction unit 180 of the image encoding apparatus 100 may include a prediction mode determination unit 181, a motion information derivation unit 182, and a prediction sample derivation unit 183. The prediction mode determination unit 181 may determine the prediction mode for the current block. The motion information derivation unit 182 may derive the motion information of the current block. The prediction sample derivation unit 183 may derive the prediction samples of the current block. For example, the inter prediction unit 180 of the image encoding apparatus 100 may search a predetermined area (search area) of reference pictures for a block similar to the current block through motion estimation, and may derive a reference block of which the difference from the current block is a minimum or less than or equal to a predetermined standard. On the basis of this, a reference picture index indicating the reference picture in which the reference block is located may be derived, and a motion vector may be derived on the basis of the location difference between the reference block and the current block. The image encoding apparatus 100 may determine a mode applied to the current block among various prediction modes. The image encoding apparatus 100 may compare RD costs for the various prediction modes and may determine the optimum prediction mode for the current block.

For example, when the skip mode or the merge mode is applied to the current block, the image encoding apparatus 100 may construct a merge candidate list described later, and may derive a reference block of which the difference from the current block is a minimum or less than or equal to a predetermined standard, among reference blocks indicated by merge candidates included in the merge candidate list. In this case, the merge candidate associated with the derived reference block may be selected, and merge index information indicating the selected merge candidate may be generated and signaled to the decoding apparatus. The motion information of the current block may be derived using the motion information of the selected merge candidate.

As another example, when the (A)MVP mode is applied to the current block, the image encoding apparatus 100 may construct an (A)MVP candidate list described later, and may use, as a motion vector predictor (mvp) of the current block, a motion vector of an mvp candidate selected among mvp candidates included in the (A)MVP candidate list. In this case, for example, a motion vector indicating a reference block derived by the above-described motion estimation may be used as a motion vector of the current block. Among the mvp candidates, an mvp candidate having the motion vector having the minimum difference from the motion vector of the current block may be the selected mvp candidate. A motion vector difference (MVD) that is a difference resulting from subtracting the mvp from the motion vector of the current block may be derived. In this case, information on the MVD may be signaled to the image decoding apparatus 200. In addition, when the (A)MVP mode is applied, a value of the reference picture index may be constructed as reference picture index information and may be separately signaled to the image decoding apparatus 200.

The image encoding apparatus 100 may derive residual samples on the basis of the prediction samples (S520). The image encoding apparatus 100 may compare the prediction samples with the original samples of the current block to derive the residual samples.

The image encoding apparatus 100 may encode image information including prediction information and residual information (S530). The image encoding apparatus 100 may output the encoded image information in the form of a bitstream. The prediction information is pieces of information related to the prediction procedure, and may include prediction mode information (e.g., a skip flag, a merge flag, or a mode index) and information on motion information. The information on the motion information may include candidate selection information (e.g., a merge index, an mvp flag, or an mvp index) that is information for deriving a motion vector. In addition, the information on the motion information may include the information on the MVD and/or the reference picture index information described above. In addition, the information on the motion information may include information indicating whether L0 prediction, L1 prediction, or bi-prediction is applied. The residual information is information on the residual samples. The residual information may include information on quantized transform coefficients for the residual samples.

The output bitstream may be stored in a (digital) storage medium and transmitted to the decoding apparatus, or may be transmitted to the image decoding apparatus 200 over a network.

In the meantime, as described above, the image encoding apparatus 100 may generate a reconstructed picture (including reconstructed samples and a reconstructed block) on the basis of the reference samples and the residual samples. This is to derive the same prediction result by the image encoding apparatus 100 as that performed in the image decoding apparatus 200, and through this, coding efficiency may be increased. Accordingly, the image encoding apparatus 100 may store a reconstructed picture (or reconstructed samples, a reconstructed block) in a memory, and may use the same as a reference picture for inter prediction. As described above, an in-loop filtering procedure may be further applied to the reconstructed picture.

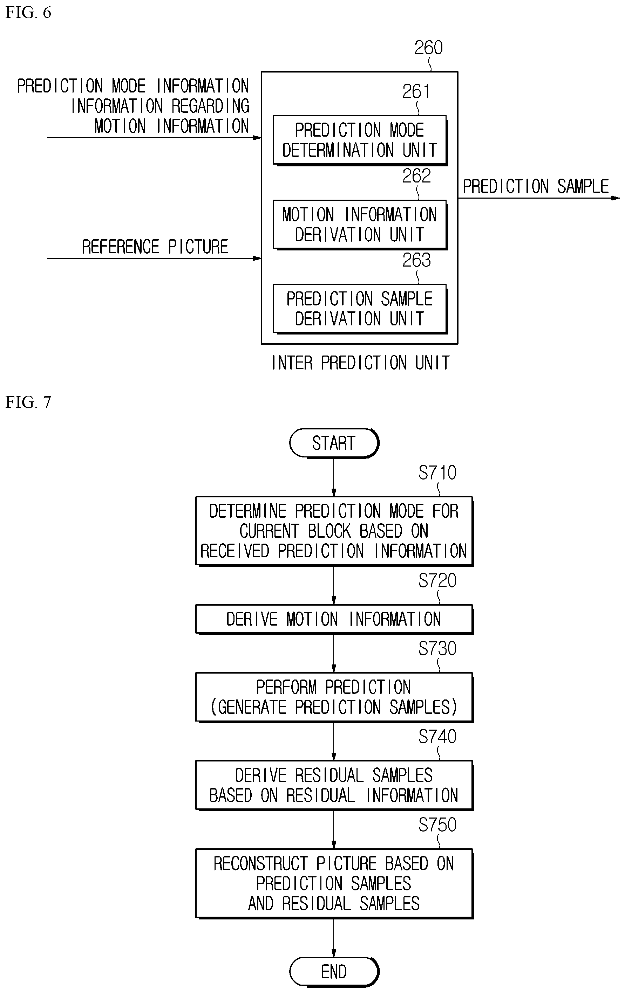

FIG. 6 is a diagram schematically showing the inter predictor 260 of the image decoding apparatus 200, and FIG. 7 is a flowchart showing a method of decoding an image based on inter prediction.

The image decoding apparatus 200 may perform the operation corresponding to the operation performed by the image encoding apparatus 100. The image decoding apparatus 200 may perform prediction on the current block on the basis of the received prediction information and may derive prediction samples.

Specifically, the image decoding apparatus 200 may determine a prediction mode for the current block on the basis of the received prediction information (S710). The image decoding apparatus 200 may determine which inter prediction mode is applied to the current block on the basis of the prediction mode information in the prediction information.

For example, on the basis of the merge flag, it may be determined whether the merge mode is applied to the current block or the (A)MVP mode is determined. Alternatively, one of various inter prediction mode candidates may be selected on the basis of the mode index. The inter prediction mode candidates may include a skip mode, a merge mode, and/or an (A)MVP mode, or may include various inter prediction modes described later.

The image decoding apparatus 200 may derive motion information of the current block on the basis of the determined inter prediction mode (S720). For example, when the skip mode or the merge mode is applied to the current block, the image decoding apparatus 200 may construct a merge candidate list described later, and may select one merge candidate among merge candidates included in the merge candidate list. The selection may be performed on the basis of the above-described selection information (a merge index). The motion information of the current block may be derived using the motion information of the selected merge candidate. The motion information of the selected merge candidate may be used as the motion information of the current block.

As another example, when the (A)MVP mode is applied to the current block, the image decoding apparatus 200 may construct an (A)MVP candidate list described later, and may use, as a motion vector predictor (mvp) of the current block, a motion vector of an mvp candidate selected among mvp candidates included in the (A)MVP candidate list. The selection may be performed on the basis of the above-described selection information (an mvp flag or an mvp index). In this case, the MVD of the current block may be derived on the basis of the information on the MVD, and the motion vector of the current block may be derived on the basis of the mvp of the current block and the MVD. In addition, a reference picture index of the current block may be derived on the basis of the reference picture index information. A picture indicated by the reference picture index in the reference picture list related to the current block may be derived as a reference picture that is referenced for inter prediction of the current block.

In the meantime, as will be described later, the motion information of the current block may be derived without constructing a candidate list. In this case, the motion information of the current block may be derived according to a procedure described in a prediction mode described later. In this case, the candidate list configuration as described above may be omitted.

The image decoding apparatus 200 may generate prediction samples for the current block on the basis of the motion information of the current block (S730). In this case, the reference picture may be derived on the basis of the reference picture index of the current block, and the prediction samples of the current block may be derived using samples of a reference block indicated on the reference picture by the motion vector of the current block. In this case, as described later, in some cases, a prediction sample filtering procedure may be further performed on all or some of the prediction samples of the current block.

For example, the inter predictor 260 of the image decoding apparatus 200 may include a prediction mode determination unit 261, a motion information derivation unit 262, and a prediction sample derivation unit 263. The prediction mode determination unit 181 may determine the prediction mode for the current block on the basis of received prediction mode information. The motion information derivation unit 182 may derive the motion information (a motion vector and/or a reference picture index) of the current block on the basis of received information on the motion information. The prediction sample derivation unit 183 may derive the prediction samples of the current block.

The image decoding apparatus 200 may generate residual samples for the current block on the basis of the received residual information (S740). The image decoding apparatus 200 may generate reconstructed samples for the current block on the basis of the prediction samples and the residual samples, and may generate, on the basis of this, a reconstructed picture (S750). Afterward, as described above, an in-loop filtering procedure may be further applied to the reconstructed picture.

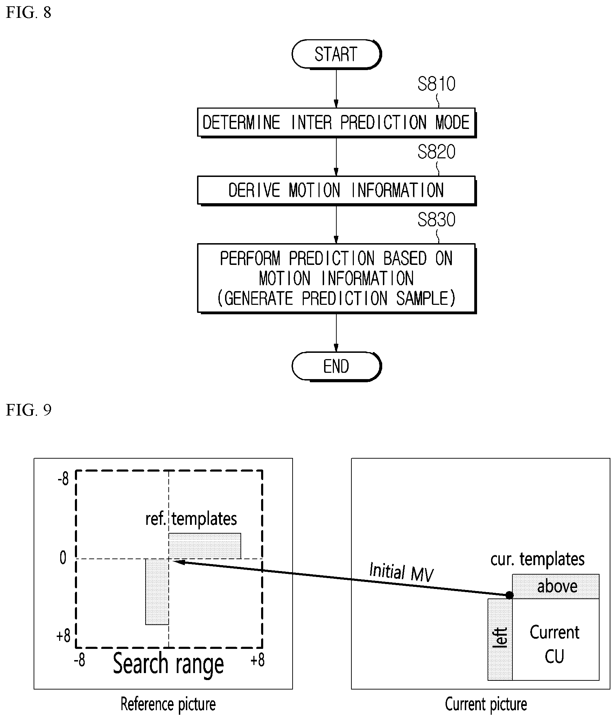

Referring to FIG. 8, the inter prediction procedure may include the steps of determining an inter prediction mode (S810), deriving motion information according to the determined prediction mode (S820), and performing prediction based on the derived motion information (generating a prediction sample)(S830). The inter prediction procedure may be performed in the image encoding apparatus 100 and the image decoding apparatus 200 as described above.

## Inter prediction mode determination

Various inter prediction modes may be used for prediction of the current block in the picture. For example, various modes, such as a merge mode, a skip mode, a motion vector prediction (MVP) mode, an affine mode, a subblock merge mode, and a merge with MVD (MMVD) mode, and the like may be used. A decoder side motion vector refinement (DMVR) mode, an adaptive motion vector resolution (AMVR) mode, a bi-prediction with CU-level weight (BCW), a bi-directional optical flow (BDOF), and the like may also be used as additional modes additionally or instead. The affine mode may be called an affine motion prediction mode. The MVP mode may be referred to as advanced motion vector prediction (AMVP) mode. In this document, some modes and/or motion information candidates derived by some modes may be included as one of motion information candidates of other modes. For example, an HMVP candidate may be added as a merge candidate in the merge/skip mode or may be added as an mvp candidate in the MVP mode.

Prediction mode information indicating the inter prediction mode of the current block may be signaled from the image encoding apparatus 100 to the image decoding apparatus 200. The prediction mode information may be included in the bitstream and received by the image decoding apparatus 200. The prediction mode information may include index information indicating one of a plurality of candidate modes. Alternatively, the inter prediction mode may be indicated through hierarchical signaling of flag information. In this case, the prediction mode information may include one or more flags. For example, a skip flag may be signaled to indicate whether a skip mode is applied, and if the skip mode is not applied, a merge flag may be signaled to indicate whether a merge mode is applied, and if the merge mode is not applied, it is indicated to apply an MVP mode or a flag for additional classification may be further signaled. The affine mode may be signaled in an independent mode or may be signaled in a mode dependent on the merge mode or the MVP mode. For example, the affine mode may include an affine merge mode and an affine MVP mode.

## Derivation of motion information

Inter prediction may be performed using motion information of the current block. The image encoding apparatus 100 may derive optimal motion information for the current block through a motion estimation procedure. For example, the image encoding apparatus 100 may search for a similar reference block having a high correlation in units of fractional pixels within a predetermined search range in the reference picture using the original block in the original picture for the current block, thereby deriving motion information. Similarity of blocks may be derived based on a difference of phase based sample values. For example, the similarity of the blocks may be calculated based on the SAD between the current block (or template of the current block) and the reference block (or template of the reference block). In this case, motion information may be derived based on a reference block having the smallest SAD in the search area. The derived motion information may be signaled to the image decoding apparatus 200 according to various methods based on the inter prediction mode.

**Generation of prediction sample**

A predicted block for the current block may be derived based on motion information derived according to the prediction mode. The predicted block may include prediction samples (prediction sample array) of the current block. When the motion vector of the current block indicates a fractional sample unit, an interpolation procedure may be performed, through which prediction samples of the current block may be derived based on reference samples in the fractional sample unit within a reference picture. When affine inter prediction is applied to the current block, prediction samples may be generated based on a sample/subblock unit MV. When bi-prediction is applied, prediction samples derived through weighting or weighted averaging (according to phase) of prediction samples derived based on L0 prediction (that is, prediction using reference picture and MVL0 in reference picture list L0) and prediction samples derived based on L1 prediction (that is, prediction using reference picture and MVL1 in reference picture list L1) may be used as prediction samples of the current block. When bi-prediction is applied, if the reference picture used for L0 prediction and the reference picture used for L1 prediction are located in different temporal directions with respect to the current picture (i.e., bi-prediction and bidirectional prediction), it may be called true bi-prediction.

As described above, reconstructed samples and reconstructed pictures may be generated based on the derived prediction samples, and thereafter, a procedure such as in-loop filtering may be performed.

**Template matching (TM)**

FIG. 9 is a diagram for explaining a template matching-based encoding/decoding method according to the present disclosure.

Template Matching (TM) is a motion vector derivation method performed at a decoder stage, and is a method of refining motion information of a current block by finding a template (hereinafter referred to as "reference template") in a reference picture which is most similar to a template (hereinafter referred to as "current template") adjacent to a current block (e.g., current coding unit, current CU). The current template may be a top neighboring block and/or a left neighboring block of the current block, or may be some of these neighboring blocks. Additionally, the reference template may be determined to have the same size as the current template.

As shown in FIG. 9, when an initial motion vector of the current block is derived, a better search for a motion vector may be performed in the surrounding area of the initial motion vector. For example, the range of the surrounding area where the search is performed may be within the [-8, +8]-pel search area centered on the initial motion vector. Additionally, the size of the search step for performing the search may be determined based on the AMVR mode of the current block. Additionally, template matching may be performed continuously with a bilateral matching process in the merge mode.

If the prediction mode of the current block is the AMVP mode, a motion vector predictor candidate (MVP candidate) may be determined based on a template matching error. For example, a motion vector predictor candidate (MVP candidate) that minimizes an error between the current template and the reference template may be selected. After that, template matching for refining a motion vector may be performed on the selected motion vector predictor candidate. At this time, template matching for refining a motion vector may not be performed on motion vector predictor candidates that are not selected.

More specifically, the refinement of the selected motion vector predictor candidate may start from full-pel (integer-pel) accuracy within the [-8, +8]-pel search area using an iterative diamond search. Alternatively, in the case of a 4-pel AMVR mode, it may start from 4-pel accuracy. After that, a search with half-pel and/or quarter-pel accuracy may follow depending on the AMVR mode. According to the search process, the motion vector predictor candidate may maintain the same motion vector accuracy as indicated by the AMVR mode even after the template matching process. In the iterative search process, if a difference between a previous minimum cost and a current minimum cost is less than an arbitrary threshold, the search process is terminated. The threshold may be equal to the area of a block, i.e., the number of samples in the block. Table 1 shows examples of search patterns according to the AMVR mode and the merge mode accompanied with AMVR.

[Table 1]

| Search pattern | AMVR mode | | | | Merge mode | |
|---|---|---|---|---|---|---|
| | 4-pel | Full-pel | Half-pel | Quarter-pel | AltIF=0 | AltIF=1 |
| 4-pel diamond | v | | | | | |
| 4-pel cross | v | | | | | |
| Full-pel diamond | | v | v | v | v | v |
| Full-pel cross | | v | v | v | v | v |
| Half-pel cross | | | v | v | v | v |
| Quarter-pel cross | | | | v | v | |
| 1/8-pel cross | | | | | v | |

If the prediction mode of the current block is the merge mode, a similar search method may be applied to the merge candidate indicated by the merge index. As shown in Table 1 above, template matching may be performed up to 1/8-pel accuracy or half-pel accuracy or lower may be skipped, which may be determined depending on whether an alternative interpolation filter is used according to the merge motion information. In this case, the alternative interpolation filter may be a filter used when AMVR is the half-pel mode. In addition, if template matching is available, depending on whether bilateral matching (BM) is available, the template matching may operate as an independent process, or may operate as an additional motion vector refinement process between block-based bilateral matching and sub-block-based bilateral matching. Whether the template matching is available and/or whether the bilateral matching is available may be determined according to an availability condition check. In the above, the accuracy of the motion vector may mean the accuracy of a motion vector difference (MVD).

#### Multi-pass Decoder-Side Motion Vector Refinement

When multi-pass decoder-side motion vector refinement is applied, bilateral matching (BM) may be applied to a coding block in a first pass. In a second pass, BM may be applied to each 16x16 sub-block in the coding block. In a third pass, the MV of each 8x8 sub-block may be refined by applying bi-directional optical flow (BDOF). The refined MV may be stored for both spatial and temporal motion vector prediction.

#### First pass - Block based bilateral matching MV refinement

In the first pass, the refined MV may be derived by applying BM to the coding block. Similar to the decoder-side motion vector refinement (DMVR), in the bi-prediction operation, the refined MV may be searched around two initial MVs MV0 and MV1 of reference picture lists L0 and L1. Refined MVs MV0_pass0 and MV1_pass1 may be searched around the initial MV based on the minimum bilateral matching cost between two reference blocks of L0 and L1.

In order to derive integer sample precision intDeltaMV during BM, a local search may be performed. The local search may loop in a search range [-sHor, sHor] in the horizontal direction and a search range [-sVer, sVer] in the vertical direction by applying a 3x3 square search pattern. Here, the values of sHor and sVer may be determined based on the block dimension, and the maximum value of sHor and sVer may be 8.

The bilateral matching cost may be derived as follows: bilCost = mvDistanceCost + sadCost. When the block size cbW * cbH is greater than 64, the MRSAD cost function may be applied to remove the DC effect of the distortion between reference blocks. When the bilCost at the center point of the 3x3 search pattern is the minimum cost, the intDeltaMV local search may be terminated. Otherwise, the current minimum cost search point becomes the new center point of the 3x3 search pattern, and the search for the minimum cost may be continued until the end of the search range is reached. The existing fractional sample refinement may be further applied to derive the final deltaMV. After the first pass, the refined MV may be derived as follows:

.

$$MV0\_pass1 = MV0 + deltaMV$$

$$MV1\_pass1 = MV1 - deltaMV$$

## Second pass - Subblock based bilateral matching MV refinement

In the second pass, the refined MV may be derived by applying BM to 16x16 grid sub-blocks. In each sub-block, the refined MV may be searched around two MVs MV0_pass1 and MV1_pass1 obtained in the first pass for reference picture lists L0 and L1. The refined MVs MV0_pass2(sbIdx2) and MV1_pass2(sbIdx2) may be derived based on the minimum bilateral matching cost between two reference sub-blocks for L0 and L1.

In each sub-block, a full search may be performed to derive integer sample precision intDeltaMV during BM. The full search may have a search range [-sHor, sHor] in the horizontal direction and a search range [-sVer, sVer] in the vertical direction. Here, the values of sHor and sVer may be determined based on the block dimension, and the maximum value of sHor and sVer may be 8.

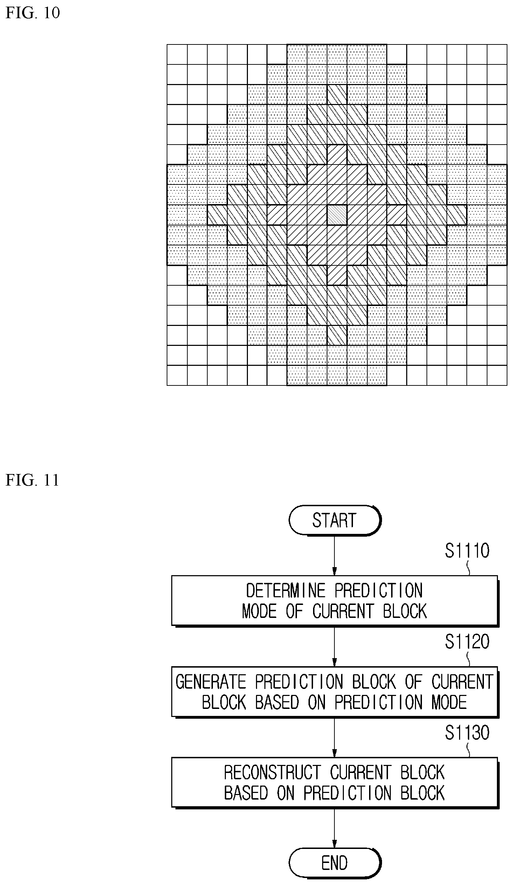

The bilateral matching cost may be calculated by applying a cost factor to the SATD cost between two reference blocks: bilCost = satdCost * costFactor. The search area (2*sHor + 1) * (2*sVer + 1) may be divided into up to five diamond-shaped search areas as shown in FIG. 10. FIG. 10 is a diagram showing search areas that may be applied in the multi-pass DMVR (Decoder-side Motion Vector Refinement) according to the present disclosure. Each search area is assigned a costFactor determined by a distance intDeltaMV between each search point and the starting MV, and each diamond area may be processed in order starting from the center of the search area. In each area, the search points may be processed in raster scan order starting from the top left corner of the area to the bottom right corner. When the minimum bilCost in the current search area is less than a threshold value equal to sbW * sbH, the int-pel full search is terminated, but in the opposite case, the int-pel search may continue to the next search area until all search points are searched. Additionally, the search process may be terminated if the difference between the previous minimum cost and the current minimum cost in the loop is less than a threshold value equal to the area of the block.

The existing VVC DMVR fractional sample refinement may be further applied to derive the final deltaMV(sbIdx2). In the second pass, the refined MV may be derived as follows:

.

$$MV0\_pass2(sbIdx2) = MV0\_pass1 + deltaMV(sbIdx2)$$

$$MV1\_pass2(sbIdx2) = MV1\_pass1 - deltaMV(sbIdx2)$$

## Third pass - Subblock based bi-directional optical flow MV refinement

In the third pass, refined MVs may be derived by applying BDOF to 8x8 grid sub-blocks. For each 8x8 sub-block, starting from the refined MV of the upper sub-block of the second pass, BDOF refinement may be applied to derive scaled Vx and Vy without clipping. The derived bioMv(Vx, Vy) is rounded with 1/16 sample precision and may be clipped to a value between -32 and 32. The refined MVs MV0_pass3(sbIdx3) and MV1_pass3(sbIdx3) of the third pass may be derived as follows:

$$MV0\_pass3(sbIdx3) = MV0\_pass2(sbIdx2) + bioMv$$

$$MV1\_pass3(sbIdx3) = MV0\_pass2(sbIdx2) - bioMv$$

## Adaptive decoder-side motion vector refinement

The adaptive decoder-side motion vector refinement technique is an extension of multi-pass DMVR consisting of two new merge modes that refine MVs in only one of L0 or L1 direction of bi-predictions for merge candidates satisfying DMVR conditions. The multi-pass DMVR process may be applied to the selected merge candidates to refine their motion vectors, but either MVD0 or MVD1 may be set to 0 in the first pass (i.e., first pass) (i.e., PU level) DMVR. The merge candidates for the new merge modes may be derived from spatial neighboring coding blocks, TMVP, non-adjacent blocks, HMVP, and pair-wise candidates similarly to the regular merge mode. The only difference is that only items satisfying the DMVR conditions may be added to the candidate list. The same merge candidate list may be used in the two new merge modes. If the BM candidate list includes inherited BCW weights, the DMVR process may remain unchanged except for the distortion calculation generated using MRSAD or MRSATD, if the weights are not equal or bi-prediction is weighted by a BCW weight. The merge index may be coded as in the regular merge mode.

Conventionally, whether to apply a motion vector (MV) derivation technique based on template matching at the decoder side is handled as a single piece of information (e.g., a Sequence Parameter Set (SPS) flag) together with whether to apply a motion vector derivation technique based on multi-pass DMVR at the decoder side. However, in a Coded Layer Video Sequence (CLVS) that supports low-latency or low-delay applications, other TM-based image encoding/decoding technique, including template matching (TM)-based motion derivation technologies, may be disabled. In such a case, the single piece of information mentioned above must indicate that such image encoding/decoding technologies are disabled, i.e., not available. In this process, a problem may arise that multi-pass DMVR, the enabling of which is indicated using a single piece of information, is disabled at the same time. In other words, the conventional method may cause problems because the bilateral matching merge flag (bm_merge_flag) is dependent on the template matching merge flag (tm_merge_flag). In addition, since the template matching merge and the bilateral matching merge cannot be applied simultaneously according to the conventional technique, there was a problem of inefficiently signaling bits because the syntax elements were signaled dependently but there was no dependency on the coding tool.

To solve such a problem, in an embodiment of the present disclosure, use of separate information (e.g., separate SPS flags) is proposed to handle template matching (TM) and multi-pass DMVR, respectively. In addition, in an embodiment of the present disclosure, a problem that adaptive decoder-side motion vector derivation is disabled when TM-based motion induction technologies are disabled can also be solved.

Meanwhile, in explaining an embodiment of the present disclosure, a template matching-based prediction mode may include a template matching merge (mode), and a bilateral matching-based prediction mode may include a bilateral matching merge (mode).

Meanwhile, in explaining an embodiment of the present disclosure, a bilateral matching merge mode may mean a multi-pass DMVR.

Meanwhile, in describing one embodiment of the present disclosure, the names of specific information and specific syntax are arbitrarily created, are examples, and are not used in a meaning limiting the corresponding information. In addition, the order of some words in the information name may also be changed (for example, sps_tm_inter_enabled_flag and sps_inter_tm_enabled_flag, etc.), and even if the order is changed, it may mean the same information.

Meanwhile, the embodiments of the present disclosure may be applied individually or in combination with each other.

Embodiment **1-1**

In an embodiment of the present disclosure, a syntax element capable of handling template-based decoder motion vector technique is proposed. The syntax element may be signaled at various unit levels including a Sequence Parameter Set (SPS).

As an example of the present disclosure, information capable of handling template matching may be signaled as a flag in the SPS, and the syntax element may be named as sps_tmvd_enabled_flag. However, since this corresponds to an embodiment of the present disclosure, the present disclosure is not limited thereto.

[Table 2]

| sps_tmvd_enabled_flag | u(1) |
|---|---|

As an example, if the syntax element sps_tmvd_enabled_flag is a first value (e.g., 1), it may indicate that template based decoder-side motion vector derivation technique is enabled for CLVS. On the other hand, if the syntax element sps_tmvd_enabled_flag is a second value (e.g., 0), it may indicate that template matching based decoder-side motion vector derivation is disabled for CLVS. The syntax element sps_tmvd_enabled_flag may be referred to as a first syntax element or first information. However, this is merely an example for the clarity of the description of the present disclosure, and thus the present disclosure is not limited thereto.

**Embodiment 1-2**

According to the first information, which is an embodiment of the present disclosure, whether to apply template matching merge (e.g., tm_merge) and whether to apply bilateral matching merge (e.g., bm_merge) may be separately signaled when template matching merge (e.g., tm_merge) is disabled. That is, according to the present disclosure, the template matching merge and the bilateral matching merge may be handled independently.

According to an embodiment of the present disclosure, the following changes may be made at a low level:

[Table 3]

| ECM-4.0 | Proposed low-level change |
|---|---|
| if (cu.firstPU->regularMergeFlag) | if (cu.firstPU->regularMergeFlag) |

(continued)

| ECM-4.0 | Proposed low-level change |
|---|---|
| {<br>tm_merge_flag(pu);<br>if (pu.tmMergeFlag)<br>{<br>bm_merge_flag(pu);<br>if (pu.bmMergeFlag)<br>{<br>pu.tmMergeFlag = false;<br>}<br>}<br>....<br>} | {<br>tm_merge_flag(pu);<br>if (!pu.tmMergeFlag)<br>{<br>bm_merge_flag(pu);<br>}<br>....<br>} |

The syntax element tm_merge_flag may be information on whether template matching merge is applied. As an example, if the value of the syntax element tm_merge_flag (e.g., second information) is a first value (e.g., 0), it may indicate that template matching merge is not applied, and if it is a second value (e.g., 1), it may indicate that template matching merge is applied. As an example, tm_merge_flag(pu) may indicate whether template matching merge is applied to a prediction unit (PU), and pu.tmMergeFlag may indicate the tm_merge_flag value of the corresponding PU. As an embodiment, if the value of the second information (e.g., syntax element tm_merge_flag) is a first value (e.g., 0), information on whether bilateral matching merge is applied (e.g., bm_merge_flag) may be signaled.

The syntax element bm_merge_flag (e.g., third information) may be information on whether bilateral matching merge is applied. For example, if the value of the syntax element is a first value (e.g., 0), it may indicate that bilateral matching merge is not applied, and if the value is a second value (e.g., 1), it may indicate that bilateral matching merge is applied. For example, bm_merge_flag(pu) may indicate whether bilateral matching merge is applied to a prediction unit (PU).

According to the embodiment, when template matching merge is disabled, information on bilateral matching merge is separately signaled, so that whether template matching merge and bilateral matching merge are applied may be independently determined.

### Embodiment 1-3

According to an embodiment of the present disclosure, there may be a case where bilateral matching merge may be applied even when template matching merge (e.g., tm_merge) is disabled, by the first information. As an example, information on whether bilateral matching merge is applied may be named as third information (e.g., bm_merge).

According to another embodiment of the present disclosure, even when the information on whether template matching merge is applied, that is, the second information, is signaled with a value indicating that template matching merge is applied (e.g., the second value, 1), the third information may be signaled. As an example, even when the information on template matching at a higher level, that is, the first information indicating whether template matching is enabled/disabled, indicates that template matching is disabled (e.g., 0), if the second information is set to a specific value (e.g., second value, 1), the third information may be signaled. In this case, the third information may be set to the same value as the second information (e.g., the second value, 1) without separate signaling, and the second information may be reset to 0 without separate signaling. In addition, if the information on template matching at a higher level, that is, the first information indicating whether template matching is enabled/disabled indicates that template matching is disabled (e.g., 0), the information indicating whether bilateral matching merge is applied, that is, the third information, is not signaled, and only the bilateral matching direction (bm_direction or bmDir) for bilateral matching merge (bm_merge) may be signaled.

According to an embodiment of the present disclosure, the following changes may be made at a low level:

[Table 4]

| ECM-4.0 | Proposed low-level change |
|---|---|
| if (cu.firstPU->regularMergeFlag)<br>{<br>tm_merge_flag(pu); | |

(continued)

<table>
<tr><th>ECM-4.0</th><th>Proposed low-level change</th></tr>
<tr><td colspan="2">if (pu.tmMergeFlag)<br>{<br>bm_merge_flag(pu);<br>if (pu.bmMergeFlag)<br>{<br>pu.tmMergeFlag = false;<br>}<br>}<br>....<br>}</td></tr>
<tr><td>void CABACReader::tm_merge_flag(PredictionUnit& pu)<br>{</td><td>void CABACReader::tm_merge_flag(PredictionUnit& pu)<br>{</td></tr>
<tr><td>pu.tmMergeFlag = false;<br>if(pu.cs->slice->getSPS()->getUseDMVDMode())<br>{<br>pu.tmMergeFlag =<br>(m_BinDecoder.decodeBin(Ctx::TMMergeFlag()))<br>}<br>}</td><td>pu.tmMergeFlag = false;<br>#if LGE_SPS_TM_ENABLE_FLAG<br>if (pu.cs->slice->getSPS()->getUseTM() ||<br>PU::isBMMergeFlagCoded(pu))<br>#endif<br>{<br>pu.tmMergeFlag =<br>(m_BinDecoder.decodeBin(Ctx::TMMergeFlag()));<br>}<br>}</td></tr>
<tr><td>void CABACReader::bm_merge_flag(PredictionUnit& pu)<br>{<br>pu.bmDir = 0;<br>pu.bmMergeFlag = false;<br>if (!PU::isBMMergeFlagCoded(pu))<br>{<br>return;<br>}<br>unsigned ctxId = DeriveCtx::CtxBMMrgFlag(*pu.cu);<br>pu.bmMergeFlag =<br>(m_BinDecoder.decodeBin(Ctx::BMMergeFlag(ctxId)));<br>if (pu.bmMergeFlag)<br>{<br>pu.bmDir=1<<<br>m_BinDecoder.decodeBin(Ctx::BMMergeFlag(3));<br>}<br>}</td><td>void CABACReader::bm_merge_flag(PredictionUnit& pu)<br>{<br>pu.bmDir = 0;<br>pu.bmMergeFlag = false;<br>if (!PU::isBMMergeFlagCoded(pu))<br>{<br>return;<br>}<br>#if LGE_SPS_TM_ENABLE_FLAG<br>if (!pu.cs->slice->getSPS()->getUseTM())<br>{<br>pu.bmMergeFlag = true;<br>pu.bmDir = 1 <<<br>m_BinDecoder.decodeBin(Ctx::BMMergeFlag(3));<br>return;<br>}<br>#endif<br>unsigned ctxId = DeriveCtx::CtxBMMrgFlag(*pu.cu);<br>pu.bmMergeFlag=<br>(m_BinDecoder.decodeBin(Ctx::BMMergeFlag(ctxId)));<br>if (pu.bmMergeFlag)<br>{<br>pu.bmDir=1<<<br>m_BinDecoder.decodeBin(Ctx::BMMergeFlag(3));<br>}</td></tr>
</table>

(continued)

| ECM-4.0 | Proposed low-level change |
|---|---|
| | } |

```
bool PU::isBNWergeFlagCoded(const PredictionUnit& pu)
{
if(pu.cs->slice->getSPS()->getUseDMVDMode() && pu.cs->slice->getUseBM())
{
return (pu.cs->sps->getMaxNumBMMergeCand() > 0);
}
return false;
}
```

As an example, in a certain function (e.g., CABACReader) stage, a certain condition (e.g., pu.cs->slice->getSPS()->getUseTM() ‖ PU::isBMMergeFlagCoded(pu)) for bilateral matching merge may be determined. isBMMergeFlagCoded may indicate whether a bilateral matching merge flag is capable of being coded for a specific unit (e.g., PU). For example, if a certain condition exists for a bilateral matching merge flag to be coded for a specific unit, it may indicate whether the certain condition is satisfied.

In addition, in a certain function (e.g., CABACReader), a certain condition (e.g., !pu.cs->slice->getSPS()->getUseTM())) for the use of template matching may be determined. Based on the certain condition, the value of information (e.g., bmMergeFlag) on whether to apply bilateral matching merge to a specific unit (e.g., PU) may be set to true, and in this case, the direction for the bilateral matching merge may be set.

Meanwhile, as an embodiment, in the case where template matching is enabled, it may be signaled with a value as shown in Table 5 below in order to apply bilateral matching merge.

[Table 5]

| CTC | ECM-4.0 | Embodiment 2 | Embodiment 3 |
|---|---|---|---|
| Second information (tm_merge_flag) | 1 | 0 | 1 |
| Third information (bm_merge_flag) | 1 | 1 | 1 |

According to Table 5, according to an embodiment of the present disclosure, when template matching merge is not applied (e.g., the second information is 0), bilateral matching merge may be applied (e.g., the third information is 1). According to another embodiment, when template matching merge is applied (e.g., the second information is 1), bilateral matching merge may be applied (e.g., the third information is 1).

Meanwhile, according to another embodiment of the present disclosure, when template matching is enabled (e.g., the first information is 1), information (e.g., the second information) on whether template merge is applied may be signaled, but when template matching is disabled, enabling of bilateral matching merge may be handled with information (e.g., the second information) on whether template merge is applied, as shown in Table 6 below.

[Table 6]

| Non-CTC (SPS TM disabling cfg) | Ecm-4.0 | Embodiment 2 | Embodiment 3 |
|---|---|---|---|
| Second information (tm_merge_flag) | Not supported | X | 1 |
| Third information (bm_merge_flag) | | 1 | X |

According to Table 6, if the second information indicates that template matching is not applied, the third information may be signaled. As an example, in this case, the third information may indicate that bilateral matching merge is applied (e.g., 1). As another example, if the second information indicates that template matching is applied (e.g., 1), the third information may not be signaled. In this case, as an example, the third information may be set to the same value as the second information.

According to the present disclosure by assigning a flag to determine whether to enable a coding tool, it is possible to individually determine whether to apply each coding tool, and by assigning a flag with a small number of bits, it is possible to efficiently determine whether to apply a coding tool even with a small amount of bits.

**Embodiment 2-1**

According to one embodiment of the present disclosure, information may be transmitted in a bitstream to determine whether template matching is enabled, and template matching-based techniques may be controlled based on this. Since template matching-based techniques may cause issues such as throughput delay in a decoder, whether template matching is supported may be considered depending on the decoder. That is, whether template matching is supported may be determined by defining an arbitrary profile. For this reason, according to the present disclosure, whether template matching-based techniques are applied in a bitstream may be indicated by proposing information (e.g., a flag, an HLS flag) in a high level syntax (High Level Syntax, HLS). In addition, based on this, the decoder may adaptively determine whether to decode the bitstream.

As an embodiment, we propose a method of encoding a flag into a bitstream and transmitting it, and controlling template matching-based coding tools used in a video encoding/decoding (encoder/decoder) process based on the flag.

Meanwhile, the syntax proposed below may be transmitted via any high-level syntax, such as Video Parameter Set (VPS)/Sequence Parameter Set (SPS)/Picture Parameter Set (PPS)/Picture Header (PH)/Slice Header (SH). In the following, it is assumed that the proposed syntax is transmitted in an SPS (Sequence Parameter Set), but this is only for the sake of clarity of explanation and the present disclosure is not limited thereto.

[Table 7]

| sps_tm_enabled_flag | u(1) |
|---|---|

As an example, the syntax sps_tm_enabled_flag (hereinafter referred to as first information) is information indicating whether the template matching technique is enabled, and may be information of a specific bit (e.g., 1 bit) and may have a first value (e.g., 0) or a second value (e.g., 1). The first information may indicate whether the overall template matching-based coding tool is applicable within a Coded Layer Video Sequence (CLVS) referencing a Sequence Parameter Set (SPS). For example, if the first information is the first value, it may indicate that the template matching-based coding tool is not applicable within the CLVS referencing the SPS. Additionally, if the first information is the second value, it may indicate that the template matching-based coding tool is applicable within the CLVS referencing the Sequence Parameter Set, that is, may be enabled.

Meanwhile, as an example, syntax for controlling each of the techniques that use template matching during encoding/decoding for inter/intra/screen contents coding (scc) during the encoding/decoding process may be defined.

Table 8 below is an example of syntax information for controlling screen contents coding based on template matching.

[Table 8]

| sps_scc_tm_enabled_flag | u(1) |
|---|---|

As an example, syntax sps_scc_tm_enabled_flag (hereinafter, referred to as second information) is information indicating whether a template matching-based screen content coding technique is enabled, and may be information of a specific bit (e.g., 1 bit) and may have a first value (e.g., 0) or a second value (e.g., 1). For example, if the second information is the first value, it may indicate that the template matching-based screen content coding tool may be disabled within the CLVS referencing the sequence parameter set (SPS). On the other hand, if the second information is the second value, it may indicate that the template matching-based screen content coding tool may be enabled within the CLVS referencing the sequence parameter set.

Table 9 below is an example of syntax information for controlling template matching-based inter-coding.

[Table 9]

| sps_inter_tm_enabled_flag | u(1) |
|---|---|

As an example, syntax sps_inter_tm_enabled_flag (hereinafter, third information) is information indicating whether the template matching-based inter technique is enabled, and may be information of a specific bit (e.g., 1 bit) and may have a first value (e.g., 0) or a second value (e.g., 1). For example, if the third information is the first value, it may indicate that the template matching-based inter coding tool may be disabled in the coded layer video sequence (CLVS) referencing the sequence parameter set (SPS). On the other hand, if the third information is the second value, it may indicate that the template matching-based screen content coding tool may be enabled in the coded layer video sequence (CLVS) referencing the sequence parameter set.

Table 10 below is an example of syntax information for controlling template matching-based intra coding.

[Table 10]

| sps_intra_tm_enabled_flag | u(1) |
|---|---|

As an example, syntax sps_intra_tm_enabled_flag (hereinafter, fourth information) is information whether template matching-based intra technique is enabled and may be information of a specific bit (e.g., 1 bit), and may have a first value (e.g., 0) or a second value (e.g., 1). For example, if the fourth information is the first value, it may indicate that the template matching-based intra coding tool may be disabled in a coded layer video sequence (CLVS) referencing the sequence parameter set (SPS). On the other hand, if the fourth information is the second value, it may indicate that the template matching-based screen content coding tool may be enabled in a coded layer video sequence (CLVS) referencing the sequence parameter set.

Meanwhile, as mentioned above, the first to fourth information may be defined at levels other than SPS (e.g., PPS, VPS, SH, PH, etc.). For example, when the first to fourth information are included in the PPS, the first to fourth information may be changed to pps_tm_enabled_flag, pps_sec_tm_enabled_flag, pps_inter_tm_enabled_flag, pps_intra_tm_enabled_flag, etc., respectively.

Meanwhile, the information controlled by the first to fourth information is not limited to only control of template matching-based encoding/decode techniques including Motion Vector Difference (MVD) sign prediction, multi-pass decoder-side motion vector refinement (e.g., first pass, second pass, third pass, etc.), adaptive decoder-side motion vector refinement, template matching based OBMC (Overlapped Block Motion Compensation), adaptive reordering of merge candidates with template matching (ARMC-TM), Merge with Motion Vector Difference (MMVD) and template matching based reordering for affine MMVD, Geometric partitioning mode (GPM) with template matching (TM), template matching based reordering for GPM split modes, intra block copy (IBC) with template matching, intra template matching, fusion for template-based intra mode derivation (TIMD), combination of CIIP with TIMD and TM merge, block level reference picture list reordering, etc. and may control all template matching-based techniques used in a video decoder/coder, although not specified.

Meanwhile, as an example, if the proposed syntax (e.g., the first to fourth information) is not transmitted in a bitstream, its value may be derived to be a specific value (e.g., 0 or 1).

As another example, if the above proposed syntaxes are not transmitted in the bitstream, their value follows the value of whether template matching technique of a specific profile is allowed, and whether template matching technique of the specific profile is allowed may be derived through information of the profile, as exemplarily defined in Table 11 below.

[Table 11]

| general_profile_idc | u(7) |
|---|---|
| general_tier_flag | u(1) |

Syntax general_profile_idc (hereinafter referred to as fifth information) may represent a profile indicator, and syntax general_tier_flag (hereinafter referred to as sixth information) may represent a tier flag. As an example, the sixth information may be information of a specific bit (e.g., 1 bit) and may have a first value (e.g., 0) or a second value (e.g., 1). Whether or not the template matching technique is applicable (allowable) may be derived based on at least one of the fifth information or the sixth information.

Alternatively, as another example, whether to apply (enable) the template matching technique may be derived based on the value of the proposed information, which is exemplarily defined at the profile level as shown in Table 12 below.

[Table 12]

| ptl_template_matching_enabled_flag | u(1) |
|---|---|

The template matching related information at the profile level proposed above may be defined as follows. Syntax ptl_template_matching_enabled_flag (hereinafter referred to as seventh information) is information indicating whether a template matching-based technique is enabled, may be information of a specific bit (e.g., 1 bit) and may have a first value (e.g., 0) or a second value (e.g., 1). As an example, if the seventh information is the first value, it may indicate that all slices in OlsInScope shall not allow a template matching coding tool, and if it is the second value, it may indicate that a Coded Video Sequence (CVS) of OlsInScope may include a template matching-based coding tool.

**Embodiment 2-2**

One embodiment proposed in the present disclosure is a method of including one piece of information in a bitstream and processing it and controlling a template matching coding tool used in a video decoder/encoder process based on this, and may signal each piece of information so that template matching-based techniques used in a video decoder or encoder may be individually enabled or disabled only when the value of the proposed information is a first value (e.g., 1).

The information proposed below may be transmitted via any high level syntax such as VPS/SPS/PPS/PH/SH, and in one embodiment of the present disclosure below, transmission in a sequence parameter set (SPS) is described as an example.

As an example, if the HLS information (e.g., HLS flag) controlling the template matching-based encoding and decoding techniques described above are transmitted separately, it may result in redundant signaling in a decoder or encoder that does not support the template matching-based technique. In order to improve the reduction in compression efficiency due to such bit overhead, information controlling template matching-based enabling and disabling may be signaled, and enabling information (e.g., enable flag) for each technique may be signaled only when the information has a specific value (e.g., 1). Examples of template matching-based coding tool enabling information are shown in Tables 13 to 17, respectively, below.

Table 13 below shows an example of template matching coding tool enabling information.

[Table 13]

| | |
|---|---|
| **sps_tm_enabled_flag** | u(1) |
| if (sps_tm_enabled_flag) { | |
| **sps_tm_inter_enabled_flag** | u(1) |
| **sps_tm_intra_enabled_flag** | u(1) |
| **sps_tm_sec_enabled_flag** | u(1) |
| } | |

As an example, the template matching-based coding tool enabling information may include template matching enabling information (e.g., sps_tm_enabled_flag), template matching-based screen content enabling information (e.g., sps_tm_scc_enabled flag), template matching-based inter enabling information (e.g., sps_tm_inter_enabled_flag), and template matching-based intra enabling information (e.g., sps_tm_intra_enabled_flag). The first information (e.g., sps_tm_enabled_flag), the second information, the third information, and the fourth information (e.g., sps_tm_sec_enabled_flag, sps_tminter_enabled_flag, sps_tm_intra_enabled_flag) may be respectively obtained. The first information to the fourth information may all be obtained from a bitstream and may be included in a sequence parameter set (SPS). The second information, the third information, or the fourth information may be obtained based on the first information. For example, if the first information is a specific value (e.g., true or 1), the second information to the fourth information may be obtained. Repeated descriptions of the first information to the fourth information will be omitted. The second information to the fourth information may be obtained independently of each other. Meanwhile, although Table 13 shows that the order of the second information to the fourth information is fixed, this is for the clarity of explanation and the order may be changed. That is, the second information may be obtained first or the fourth information may be obtained first, and the third information or the fourth information may be obtained last.

Meanwhile, in addition to the second to fourth information, template matching-based coding tool enabling information may be further obtained by the first information. Table 14 below shows an example of template matching coding tool enabling information that may be obtained. More specifically, according to one embodiment of the present disclosure, whether to apply each template matching technique may be determined, and enabling information for each detailed technique may be signaled based on this.

[Table 14]

| | |
|---|---|
| **sps_tm_enabled_flag** | u(1) |
| if (sps_tm_enabled_flag) { | |
| **sps_tm_obmc_enabled_flag** | u(1) |
| **sps_tm_armc_enabled_flag** | u(1) |
| **sps_tm_amvp_enabled_flag** | u(1) |

(continued)

| | |
|---|---|
| **sps_tm_merge_enabled_flag** | u(1) |
| **sps_tm_gpm_enabled_Flag** | u(1) |
| **sps_tm_tmvp_nonadjacent_reordering_enabled_flag** | u(1) |
| **sps_tm_mvd_sign_prediction_enabled_flag** | u(1) |
| **sps_tm_mmvd_affine_mmvd_enabled_flag** | u(1) |
| **sps_tm_gpm_split_mode_reordering_enabled_flag** | u(1) |
| **sps_tm_reference_picture_reordering_enabled_flag** | u(1) |
| **sps_tm_intra_block_copy_enabled_flag** | u(1) |
| **sps_tm_intra_template_matching_enabled_flag** | u(1) |
| **sps_tm_intra_mode_derivation_enabled_flag** | u(1) |
| **sps_tm_ciip_enabled_flag** | u(1) |
| .... | |
| } | |

As an example, the enabling information for each template matching technique, i.e., the template matching-based coding tool enabling information, includes template matching-based OBMC (Overlapped Block Motion Compensation) enabling information (e.g., sps_tm_obmc_enabled_flag), template matching-based ARMC (Adaptive reordering of merge candidates) enabling information (e.g., sps_tm_armc_enabled_flag), template matching-based AMVP (advanced motion vector prediction) enabling information (e.g., sps_tm_amvp_enabled_flag), template matching-based merge enabling information (e.g., sps_tmmerge_enabled_flag), template matching-based GPM (Geometric Partitioning Mode) enabling information (e.g., sps_tm_gpm_enabled_Flag), and template matching-based TMVP (temporal motion vector prediction) non-adjacent reordering enabling information (e.g., sps_tm_tmvp_nonadjacent_reordering_enabled_flag), template matching-based motion vector difference (MVD) sign prediction enable information (e.g., sps_tm_mvd_sign_prediction_enabled_flag), template matching-based MMVD and/or affine MMVD (merge with MVD) enable information (e.g., sps_tm_mmvd_affine_mmvd_enabled_flag), template matching-based GPM split mode reordering enable information (e.g., sps_tm_gpm_split_mode_reordering_enabled_flag), template matching-based reference picture reordering enable information (e.g., sps_tm_reference_picture_reordering_enabled_flag), template matching-based intra block copy (IBC) enable information (e.g., sps_tm_intra_block_copy_enabled_flag), Template matching-based intra template matching enabling information (e.g., sps_tm_intra_template_matching_enabled_flag), template matching-based intra mode derivation enabling information (e.g., sps_tm_intra_mode_derivation_enabled_flag), template matching-based CIIP (Combined Inter and Intra Prediction) enabling information (e.g., sps_tm_ciip_enabled_flag), etc. The template matching-based coding tool enabling information described above may be obtained based on specific information (e.g., first information, e.g., sps_tm_enabled_flag). All of the template matching-based coding tool enabling information shown in Table 14, including the first information, may be obtained from a bitstream and may be included in a sequence parameter set (SPS). Meanwhile, some of the template matching-based coding tool enabling information may be obtained when the first information (e.g., sps_tm_enabled_flag) is a specific value (e.g., true or 1). Each template matching-based coding tool enabling information may be obtained independently of each other. Meanwhile, although Table 14 shows that the order of each enabling information is fixed, this is for the clarity of explanation and the order may be changed. That is, other information may be obtained first in addition to the template matching-based OBMC enabling information, or other information may be obtained last in addition to the template matching-based CIIP enabling information. Table 15 below shows an example of template matching coding tool enabling information. More specifically, it is an example of template matching coding tool enabling information associated with the third information described above (e.g., sps_tm_inter_enabled_flag, i.e., sps_inter_tm_enabled_flag).

[Table 15]

| | |
|---|---|
| **sps_inter_tm_enabled_flag** | u(1) |
| if (sps_inter_tm_enabled_flag) { | |
| **sps_tm_obmc_enabled_flag** | u(1) |
| **sps_tm_armc_enabled_flag** | u(1) |

(continued)

| | |
|---|---|
| **sps_tm_amvp_enabled_flag** | u(1) |
| **sps_tm_merge_enabled_flag** | u(1) |
| **sps_tm_gpm_enabled_Flag** | u(1) |
| **sps_tm_tmvp_nonadjacent_reordering_enabled_flag** | u(1) |
| **sps_tm_mvd_sign_prediction_enabled_flag** | u(1) |
| **sps_tm_mmvd_affine_mmvd_enabled_flag** | u(1) |
| **sps_tm_gpm_split_mode_reordering_enabled_flag** | u(1) |
| **sps_tm_reference_picture_reordering_enabled_flag** | u(1) |
| .... | |
| } | |

As an example, the enabling information of each template matching technique to which the third information can be associated, i.e., the template matching-based coding tool enabling information, includes template matching-based OBMC (Overlapped Block Motion Compensation) enabling information (e.g., sps_tm_obmc_enabled_flag), template matching-based ARMC (Adaptive reordering of merge candidates) enabling information (e.g., sps_tm_armc_enabled_flag), template matching-based AMVP (advanced motion vector prediction) enabling information (e.g., sps_tm_amvp_enabled_flag), template matching-based merge enabling information (e.g., sps_tm_merge_enabled_flag), template matching-based GPM (Geometric Partitioning Mode) enabling information (e.g., sps_tm_gpm_enabled_Flag), template matching-based TMVP (temporal motion vector prediction) non-adjacent reordering enabling information (e.g., sps_tm_tmvp_nonadjacent_reordering_enabled_flag), template matching-based motion vector difference (MVD) sign prediction enable information (e.g., sps_tm_mvd_sign_prediction_enabled_flag), template matching-based merge with MVD and/or affine MMVD enabling information (e.g., sps_tm_mmvd_affine_mmvd_enabled_flag), template matching-based GPM split mode reordering enabling information (e.g., sps_tm_gpm_split_mode_reordering_enabled_flag), template matching-based reference picture reordering enabling information (e.g., sps_tm_reference_picture_reordering_enabled_flag), etc. The template matching-based coding tool enabling information described above may be obtained based on specific information (e.g., third information, e.g., sps_inter_tm_enabled_flag). All of the template matching-based coding tool enabling information shown in Table 15, including the third information, may be obtained from a bitstream and may be included in a sequence parameter set (SPS). Meanwhile, some of the template matching-based coding tool enabling information may be obtained when the third information (e.g., sps_inter_tm_enabled_flag) is a specific value (e.g., true or 1). Each of the template matching-based coding tool enabling information may be obtained independently of each other. Meanwhile, although Table 15 shows that the order of each template matching-based coding tool enabling information is fixed, this is for the clarity of explanation and the order may be changed. That is, other information may be obtained first in addition to the template matching-based OBMC enabling information, or other information may be obtained last in addition to the template matching-based reference picture reordering enabling information.

Table 16 below shows an example of template matching coding tool enabling information. More specifically, it is an example of template matching coding tool enabling information associated with the fourth information described above (e.g., sps_tm_intra_enabled_flag, i.e., sps_intra_tm_enabled_flag).

[Table 16]

| | |
|---|---|
| **sps_intra_tm_enabled_flag** | u(1) |
| if (sps_intra_tm_enabled_flag) { | |
| **sps_tm_intra_block_copy_enabled_flag** | u(1) |
| **sps_tm_intra_template_matching_enabled_flag** | u(1) |
| **sps_tm_intra_mode_derivation_enabled_flag** | u(1) |
| **sps_tm_ciip_enabled_flag** | u(1) |
| .... | |
| } | |

As an example, the enabling information of each template matching technique with which the fourth information may be associated, i.e., the template matching-based coding tool enabling information, may include template matching-based intra block copy (IBC) enabling information (e.g., sps_tm_intra_block_copy_enabled_flag), template matching-based intra template matching enabling information (e.g., sps_tm_intra_template_matching_enabled_flag), template matching-based intra mode derivation enabling information (e.g., sps_tm_intra_mode_derivation_enabled_flag), template matching-based CIIP (Combined Inter and Intra Prediction) enabling information (e.g., sps_tm_ciip_enabled_flag), etc.

The template matching-based coding tool enabling information described above may be obtained based on specific information (for example, the fourth information, for example, sps_intra_tm_enabled_flag). All of the template matching-based coding tool enabling information shown in Table 16, including the fourth information, may be obtained from a bitstream and may be included in a sequence parameter set (SPS). Meanwhile, some of the template matching-based coding tool enabling information may be obtained when the fourth information (for example, sps_intra_tm_enabled_flag) is a specific value (for example, true or 1). Each piece of template matching-based coding tool enabling information may be obtained independently of each other. Meanwhile, although Table 16 shows that the order of each template matching-based coding tool enabling information is fixed, this is for the clarity of explanation and the order may be changed. That is, other information may be obtained first in addition to the template matching-based intra block copy enabling information, or other information may be obtained last in addition to the template matching-based CIIP enabling information.

Table 17 below shows an example of template matching coding tool enabling information. More specifically, it is an example of template matching coding tool enabling information associated with the second information described above (e.g., sps_tm_scc_enabled_flag, i.e., sps_scc_tm_enabled_flag).

[Table 17]

| | |
|---|---|
| **sps_scc_tm_enabled_flag** | u(1) |
| if (sps_intra_tm_enabled_flag) { | |
| **sps_tm_intra_block_copy_enabled_flag** | u(1) |
| **sps_tm_intra_template_matching_enabled_flag** | u(1) |
| .... | |
| } | |

As an example, enabling information of each template matching technique with which the second information may be associated, i.e., template matching-based coding tool enabling information, may include template matching-based intra block copy (IBC) enabling information (e.g., sps_tm_intra_block_copy_enabled_flag), template matching-based intra template matching enabling information (e.g., sps_tm_intra_template_matching_enabled_flag), etc.

The template matching-based coding tool enabling information described above may be obtained based on specific information (e.g., the second information, e.g., sps_scc_tm_enabled_flag). All of the template matching-based coding tool enabling information shown in Table 17, including the second information, may be obtained from a bitstream and may be included in a sequence parameter set (SPS). Meanwhile, some of the template matching-based coding tool enabling information may be obtained when the second information (e.g., sps_scc_tm_enabled_flag) is a specific value (e.g., true or 1). Each piece of template matching-based coding tool enabling information may be obtained independently of each other. Meanwhile, although Table 17 shows that the order of each piece of template matching-based coding tool enabling information is fixed, this is for the clarity of explanation and the order may be changed. That is, other information may be obtained first in addition to the template matching-based intra block copy enabling information, or other information may be obtained last in addition to the template matching-based intra template matching enabling information.

Meanwhile, the template matching-based coding tool enabling information is not limited to the control of the template matching-based encoding/decoding technique mentioned above. That is, all template matching-based techniques used in the video decoder/coder may be controlled, although not specified.

In addition, although in the syntax structure of the embodiment, an example in which all information is transmitted in the sequence parameter set (SPS) was described, each piece of information may be transmitted at different levels. As another example, the first information (e.g., sps_tm_enabled_flag) may be signaled in the sequence parameter set (SPS), and the other template matching-based coding tool enabling information described above (e.g., template matching-based OBMC enabling information (e.g., sps_tm_obmc_enabled_flag), template matching-based CIIP enabling information (e.g., sps_tm_ciip_enabled_flag), etc.) may be transmitted at a lower syntax level (e.g., picture parameter set (PPS), picture header, slice header) of the sequence parameter set (SPS). In this case, the first information (e.g., sps_tm_enabled_flag) may also be referenced in the information at the lower syntax level of the sequence parameter set. That is, template matching-based coding tool enabling information at the lower syntax level may be obtained based on the first information. For example, template matching-based coding tool enabling information is obtained based on the value of the first information being a specific value (e.g., true or 1), and template matching-based OBMC enabling information (e.g., sps_tm_obmc_enabled_flag above) may be signaled in a slice header (e.g., sh_tm_obmc_enabled_flag) and template matching-based CIIP enabling information (e.g., sps_tm_ciip_enabled_flag above) may be signaled in a picture header (e.g., ph_tm_ciip_enabled_flag).

As another example, if the template matching-based coding tool enabling information proposed above (e.g., sps_tm_enabled_flag, sps_inter_tm_enabled_flag, sps_intra_tm_enabled_flag, sps_sec_tm_enabled_flag, etc.) is not signaled in the bitstream, its value may be derived to be a specific value (e.g., 0).

As another example, or if the template matching-based coding tool enabling information proposed above is not signaled in the bitstream, its value may be derived to a specific value (e.g., 1).

Alternatively, if the template matching-based coding tool enabling information proposed above is not signaled in the bitstream, the value of the information follows the value of whether template matching is allowed in a specific profile, and whether template matching is allowed in a specific profile may be derived through a value defining information in the profile below. Table 18 below shows an example of information in the profile.

[Table 18]

| general_profile_idc | u(7) |
|---|---|
| general_tier_flag | u(1) |

Syntax general_profile_idc (hereinafter referred to as fifth information) may indicate a profile indicator, and syntax general_tier_flag (hereinafter referred to as sixth information) may indicate a tier flag. Repeated descriptions of the fifth information and the sixth information will be omitted.

As another example, the value of other template matching-based coding tool enabling information may be derived according to the value of template matching enabling information defined at the profile level, as exemplarily shown in Table 19 below.

[Table 19]

| ptl_template_matching_enabled_flag | u(1) |
|---|---|

The template matching related information at the profile level proposed above may be defined as follows. Syntax ptl_template_matching_enabled_flag (hereinafter referred to as seventh information) may be information indicating whether template matching-based technique is enabled. Repated description of the seventh information will be omitted.

Meanwhile, if the template matching-based coding tool enabling information (e.g., sps_tm_enabled_flag, sps_inter_tm_enabled_flag, sps_intra_tm_enabled_flag, sps_sec_tm_enabled_flag, etc.) has a specific value (e.g., 0), the higher-level coding tool enabling information (e.g., sps_tm_obmc_enabled_flag, sps_tm_armc_enabled_flag, etc.) that is not transmitted may be derived to have a specific value (e.g., the same value, i.e., 0).

Meanwhile, since the order disclosed in Tables 13 to 19 is only an embodiment of the present disclosure, the order of obtaining each piece of information may be changed. In addition, only some of the information expressed in Tables 13 to 19 may be obtained and other information may not be obtained, and the order of obtaining may also be changed.

FIG. 11 is a flowchart illustrating an image encoding/decoding method according to an embodiment of the present disclosure.

As an example, the method of FIG. 11 may be performed by an image encoding apparatus or an image decoding apparatus, and may be combined with other embodiments described above.

As an example, if FIG. 11 shows an image decoding method performed by an image decoding apparatus, a prediction mode of a current block may be determined (S1110). Based on the determined prediction mode, a prediction block of the current block may be generated (S1120), and based on the generated prediction block, the current block may be reconstructed (S1130).

As another example, if FIG. 11 shows an image encoding method performed by an image encoding apparatus, a prediction mode of a current block may be determined (S1110), and based on the determined prediction mode, a prediction block of the current block may be generated (S1120), and based on the generated prediction block, the current block may be reconstructed (S1130).

Meanwhile, the template matching-based coding tool enabling information may include template matching-based screen content coding tool enabling information, and in this case, the template matching-based screen content coding tool enabling information may include intra block copy enabling information or intra template matching enabling information. As an example, the template matching-based coding tool enabling information may include template matching-based inter coding tool enabling information, and in this case, the template matching-based inter coding tool enabling information may include at least one of OBMC enabling information, ARMC enabling information, AMVP enabling information, merge enabling information, GPM enabling information, TMVP non-adjacent reordering enabling information, MMVD affine enabling information, GPM split mode reordering enabling information, or reference picture reordering enabling information. In addition, as an example, the template matching-based coding tool enabling information may include template matching-based intra coding tool enabling information, and in this case, the template matching-based intra coding tool enabling information may include at least one of intra block copy enabling information, intra template matching enabling information, intra mode derivation enabling information, or CIIP enabling information. In addition, the template matching-based coding tool enabling information can be signaled in the bitstream. That is, on the encoding side, the template matching-based coding tool enabling information may be encoded in the bitstream, and on the decoding side, the template matching-based coding tool enabling information may be obtained from the bitstream. In addition, the template matching-based coding tool enabling information may be included in a sequence parameter set, a picture parameter set, a slice header, a picture header, etc.

Meanwhile, the bitstream generated by the image encoding method may be transmitted to a decoder or other device. It may also be stored in a computer-readable medium.

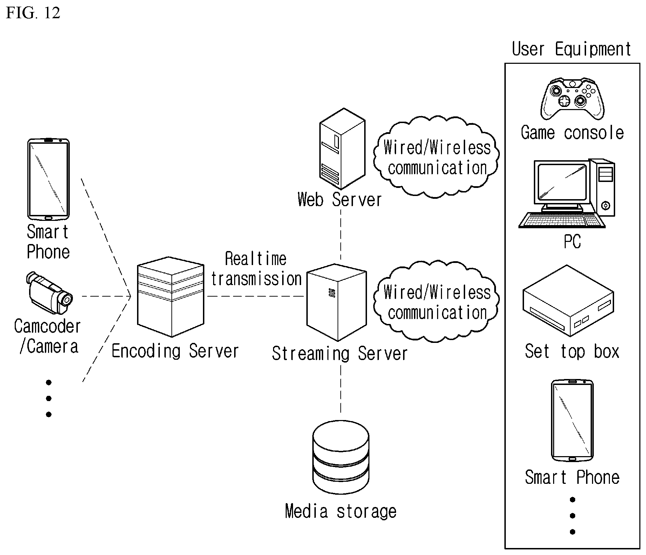

FIG. 12 is a view showing a content streaming system, to which an embodiment of the present disclosure is applicable.

As shown in FIG. 12, the content streaming system, to which the embodiment of the present disclosure is applied, may largely include an encoding server, a streaming server, a web server, a media storage, a user device, and a multimedia input device.

The encoding server compresses content input from multimedia input devices such as a smartphone, a camera, a camcorder, etc. into digital data to generate a bitstream and transmits the bitstream to the streaming server. As another example, when the multimedia input devices such as smartphones, cameras, camcorders, etc. directly generate a bitstream, the encoding server may be omitted.

The bitstream may be generated by an image encoding method or an image encoding apparatus, to which the embodiment of the present disclosure is applied, and the streaming server may temporarily store the bitstream in the process of transmitting or receiving the bitstream.

The streaming server transmits the multimedia data to the user device based on a user's request through the web server, and the web server serves as a medium for informing the user of a service. When the user requests a desired service from the web server, the web server may deliver it to a streaming server, and the streaming server may transmit multimedia data to the user. In this case, the content streaming system may include a separate control server. In this case, the control server serves to control a command/response between devices in the content streaming system.

The streaming server may receive content from a media storage and/or an encoding server. For example, when the content are received from the encoding server, the content may be received in real time. In this case, in order to provide a smooth streaming service, the streaming server may store the bitstream for a predetermined time.

Examples of the user device may include a mobile phone, a smartphone, a laptop computer, a digital broadcasting terminal, a personal digital assistant (PDA), a portable multimedia player (PMP), navigation, a slate PC, tablet PCs, ultrabooks, wearable devices (e.g., smartwatches, smart glasses, head mounted displays), digital TVs, desktops computer, digital signage, and the like.

Each server in the content streaming system may be operated as a distributed server, in which case data received from each server may be distributed.

The scope of the disclosure includes software or machine-executable commands (e.g., an operating system, an application, firmware, a program, etc.) for enabling operations according to the methods of various embodiments to be executed on an apparatus or a computer, a non-transitory computer-readable medium having such software or commands stored thereon and executable on the apparatus or the computer.

**Industrial Applicability**

The embodiments of the present disclosure may be used to encode or decode an image.

**Claims**

1. An image decoding method performed by an image decoding apparatus, the image decoding method comprising:

   determining a prediction mode of a current block;
   generating a prediction block of the current block based on the prediction mode; and

reconstructing the current block based on the prediction block,
wherein the prediction mode is determined based on template matching-based coding tool enabling information.

2. The image decoding method of claim 1, wherein the template matching-based coding tool enabling information includes template matching-based screen content coding tool enabling information.

3. The image decoding method of claim 2, wherein the template matching-based coding tool enabling information includes intra block copy enabling information or intra template matching enabling information.

4. The image decoding method of claim 1, wherein the template matching-based coding tool enabling information includes template matching-based inter coding tool enabling information.

5. The image decoding method of claim 4, wherein the template matching-based coding tool enabling information includes at least one of OBMC enabling information, ARMC enabling information, AMVP enabling information, merge enabling information, GPM enabling information, TMVP non-adjacent reordering enabling information, MVD sign prediction enabling information, MMVD affine enabling information, GPM split mode reordering enabling information, or reference picture reordering enabling information.

6. The image decoding method of claim 1, wherein the template matching-based coding tool enabling information includes template matching-based intra coding tool enabling information.

7. The image decoding method of claim 6, wherein the template matching-based coding tool enabling information includes at least one of intra block copy enabling information, intra template matching enabling information, intra mode derivation enabling information or CIIP enabling information.

8. The image decoding method of claim 1, wherein the template matching-based coding tool enabling information is obtained from a bitstream.

9. The image decoding method of claim 8, wherein the template matching-based coding tool enabling information is included in one of a video parameter set, a sequence parameter set, a picture parameter set, a slice header or a picture header.

10. An image encoding method performed by an image encoding apparatus, the image encoding method comprising:

    determining a prediction mode of a current block;
    generating a prediction block of the current block based on the prediction mode; and
    reconstructing the current block based on the prediction block,
    wherein the prediction mode is determined based on template matching-based coding tool enabling information.

11. The image encoding method of claim 10, wherein the template matching-based coding tool enabling information is encoded in a bitstream.

12. A method of transmitting a bitstream comprising:

    transmitting a bitstream generated by an image encoding method,
    wherein the image encoding method comprises:

        determining a prediction mode of a current block;
        generating a prediction block of the current block based on the prediction mode; and
        reconstructing the current block based on the prediction block, and
        wherein the prediction mode is determined based on template matching-based coding tool enabling information.

13. A computer-readable medium storing a bitstream generated by the image encoding method of claim 10.

FIG. 1

FIG. 2

FIG. 3

FIG. 4

180

181

ORIGINAL PICTURE

PREDICTION MODE
DETERMINATION UNIT

PREDICTION MODE INFORMATION
INFORMATION REGARDING
MOTION INFORMATION

182

MOTION INFORMATION
DERIVATION UNIT

REFERENCE PICTURE

PREDICTION SAMPLE

183

PREDICTION SAMPLE
DERIVATION UNIT

INTER PREDICTION UNIT

FIG. 5

START

S510

PERFORM PREDICTION (DETERMINE
INTER PREDICTION MODE, DERIVE
MOTION INFORMATION AND
GENERATE PREDICTION SAMPLES)

S520

DERIVE RESIDUAL SAMPLES
BASED ON PREDICTION SAMPLES

S530

ENCODE IMAGE INFORMATION
INCLUDING PREDICTION INFORMATION
AND RESIDUAL INFORMATION

END

FIG. 6

260

PREDICTION MODE INFORMATION
INFORMATION REGARDING
MOTION INFORMATION

261

PREDICTION MODE
DETERMINATION UNIT

262

MOTION INFORMATION
DERIVATION UNIT

263

PREDICTION SAMPLE
DERIVATION UNIT

REFERENCE PICTURE

PREDICTION SAMPLE

INTER PREDICTION UNIT

FIG. 7

START

S710

DETERMINE PREDICTION MODE FOR
CURRENT BLOCK BASED ON
RECEIVED PREDICTION INFORMATION

S720

DERIVE MOTION INFORMATION

S730

PERFORM PREDICTION
(GENERATE PREDICTION SAMPLES)

S740

DERIVE RESIDUAL SAMPLES
BASED ON RESIDUAL INFORMATION

S750

RECONSTRUCT PICTURE BASED ON
PREDICTION SAMPLES
AND RESIDUAL SAMPLES

END

FIG. 8

```
                    ┌──────────┐
                    │  START   │
                    └────┬─────┘
                         │               S810
                         ▼               ⌒
         ┌──────────────────────────────────┐
         │ DETERMINE INTER PREDICTION MODE   │
         └──────────────┬───────────────────┘
                        │                S820
                        ▼                ⌒
         ┌──────────────────────────────────┐
         │     DERIVE MOTION INFORMATION     │
         └──────────────┬───────────────────┘
                        │                S830
                        ▼                ⌒
         ┌──────────────────────────────────┐
         │    PERFORM PREDICTION BASED ON    │
         │         MOTION INFORMATION        │
         │  (GENERATE PREDICTION SAMPLE)     │
         └──────────────┬───────────────────┘
                        │
                        ▼
                   ┌──────────┐
                   │   END    │
                   └──────────┘
```

FIG. 9

Reference picture                    Current picture

FIG. 10

FIG. 11

START

DETERMINE PREDICTION
MODE OF CURRENT BLOCK
S1110

GENERATE PREDICTION BLOCK OF CURRENT
BLOCK BASED ON PREDICTION MODE
S1120

RECONSTRUCT CURRENT BLOCK
BASED ON PREDICTION BLOCK
S1130

END

FIG. 12

## INTERNATIONAL SEARCH REPORT

| International application No. |
| --- |
| **PCT/KR2023/010358** |

### A. CLASSIFICATION OF SUBJECT MATTER

**H04N 19/593**(2014.01)i; **H04N 19/105**(2014.01)i; **H04N 19/176**(2014.01)i; **H04N 19/11**(2014.01)i; **H04N 19/70**(2014.01)i

According to International Patent Classification (IPC) or to both national classification and IPC

### B. FIELDS SEARCHED

Minimum documentation searched (classification system followed by classification symbols)

H04N 19/593(2014.01); H04N 19/105(2014.01); H04N 19/11(2014.01); H04N 19/176(2014.01); H04N 19/56(2014.01); H04N 19/573(2014.01); H04N 19/70(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 블록(block), 예측(predict), 모드(mode), 템플릿(template), 매칭 (matching), 인트라(intra), 인터(inter)

### C. DOCUMENTS CONSIDERED TO BE RELEVANT

| Category* | Citation of document, with indication, where appropriate, of the relevant passages | Relevant to claim No. |
| --- | --- | --- |
| Y | KR 10-2015-0113522 A (INTELLECTUAL DISCOVERY CO., LTD.) 08 October 2015 (2015-10-08) See paragraphs [0001], [0030]-[0037], [0043]-[0049], [0116] and [0172]; claim 21; and figures 1-3a. | 1-13 |
| Y | CHEN, Chun-Chi et al. AHG6: ECM software configuration parameters for template matching tools. JVET-AA0132-v2, Joint Video Experts Team (JVET) of ITU-T SG 16 WP 3 and ISO/IEC JTC 1/SC 29, 27th Meeting, by teleconference. pp. 1-3, 07 July 2022. See pages 1-2. | 1-13 |
| A | US 2020-0128258 A1 (MEDIATEK INC.) 23 April 2020 (2020-04-23) See claims 15-17. | 1-13 |
| A | WO 2019-198997 A1 (LG ELECTRONICS INC.) 17 October 2019 (2019-10-17) See claims 1-8. | 1-13 |
| A | WO 2019-046356 A1 (INTERDIGITAL VC HOLDINGS, INC.) 07 March 2019 (2019-03-07) See claims 1 and 5-9. | 1-13 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **23 October 2023** | **23 October 2023** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/010358**

| Patent document cited in search report | | | Publication date (day/month/year) | Patent family member(s) | | | Publication date (day/month/year) |
|---|---|---|---|---|---|---|---|
| KR | 10-2015-0113522 | A | 08 October 2015 | CN | 110312128 | A | 08 October 2019 |
| | | | | CN | 110312128 | B | 22 November 2022 |
| | | | | KR | 10-2022-0154068 | A | 21 November 2022 |
| | | | | KR | 10-2464786 | B1 | 08 November 2022 |
| | | | | US | 2017-0134726 | A1 | 11 May 2017 |
| | | | | WO | 2015-152507 | A1 | 08 October 2015 |
| US | 2020-0128258 | A1 | 23 April 2020 | CN | 110140355 | A | 16 August 2019 |
| | | | | CN | 110140355 | B | 08 March 2022 |
| | | | | EP | 3560202 | A1 | 30 October 2019 |
| | | | | US | 10911761 | B2 | 02 February 2021 |
| | | | | WO | 2018-121506 | A1 | 05 July 2018 |
| WO | 2019-198997 | A1 | 17 October 2019 | None | | | |
| WO | 2019-046356 | A1 | 07 March 2019 | CN | 111095932 | A | 01 May 2020 |
| | | | | CN | 111095932 | B | 07 June 2022 |
| | | | | CN | 115379239 | A | 22 November 2022 |
| | | | | EP | 3451669 | A1 | 06 March 2019 |
| | | | | EP | 3677033 | A1 | 08 July 2020 |
| | | | | JP | 2020-532898 | A | 12 November 2020 |
| | | | | JP | 7334146 | B2 | 28 August 2023 |
| | | | | US | 2020-0195974 | A1 | 18 June 2020 |

Form PCT/ISA/210 (patent family annex) (July 2022)